(19) Europäisches Patentamt / European Patent Office / Office européen des brevets

(11) **EP 4 567 636 B1**

(12) **FASCICULE DE BREVET EUROPEEN**

(45) Date de publication et mention
de la délivrance du brevet:
**01.04.2026 Bulletin 2026/14**

(21) Numéro de dépôt: **24216037.2**

(22) Date de dépôt: **28.11.2024**

(51) Classification Internationale des Brevets (IPC):
**G06F 18/20** (2023.01)  **G06N 7/01** (2023.01)
**G06T 7/215** (2017.01)  **G08B 13/194** (2006.01)
**G01S 17/00** (2020.01)

(52) Classification Coopérative des Brevets (CPC):
**G06F 18/295; G01S 5/0294; G01S 7/003;
G01S 13/87; G01S 15/04; G01S 15/87;
G01S 17/87; G06N 7/01;** G01S 5/0278

(54) **SYSTEME ET PROCEDE DE DETECTION COOPERATIF**

KOOPERATIVES SENSORSYSTEM UND VERFAHREN

SYSTEM AND METHOD FOR COOPERATIVE SENSING

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **07.12.2023 FR 2313753**

(43) Date de publication de la demande:
**11.06.2025 Bulletin 2025/24**

(73) Titulaire: **THALES
92190 Meudon (FR)**

(72) Inventeur: **ATTAL, Yoann
78990 ELANCOURT (FR)**

(74) Mandataire: **Atout PI Laplace
Immeuble Up On
25 Boulevard Romain Rolland
CS 40072
75685 Paris Cedex 14 (FR)**

(56) Documents cités:
EP-A1- 2 207 154   EP-A1- 2 423 851
EP-A1- 3 874 480

**Description**

Domaine technique

L'invention concerne de manière générale les systèmes de détection et en particulier un système et un procédé de détection coopératif.

Dans un environnement donné, plusieurs dispositifs de détection, tels que par exemple des dispositifs radars peuvent être en présence et être amenés à coopérer entre eux aux fins d'une même mission de détection ou de surveillance (mission commune) dans une zone de surveillance.

Cet ensemble de dispositifs de détection est contrôlé de manière à assigner un ensemble de tâches aux différents dispositifs de détection coopérants qui doivent alors les exécuter afin de réaliser la mission commune.

Un tel contrôle est réalisé en utilisant une logique d'exécution qui régit les différents dispositifs de détection coopérants. Cette logique d'exécution distribuée sur les différents dispositifs de détection doit être plus efficace que si chaque dispositif de détection opérait isolément et indépendamment des autres.

Dans les solutions existantes, la sélection des dispositifs de détection devant coopérer ensemble, pour réaliser une mission de surveillance, est effectuée par un opérateur, et n'est donc pas optimisée.

Le document de l'art antérieur le plus proche EP 3 874 480 décrit un système de surveillance des installations pour l'évaluation de la sécurité des anomalies ou d'un état anormal d'une installation en effectuant une phase d'apprentissage à base de chaînes de Markov cachées (HMM).

Il existe ainsi un besoin pour un système et un procédé de détection coopératif amélioré.

Définition générale de l'invention

A cet effet, il est proposé un système de détection coopératif comprenant un ensemble de détection pour surveiller une zone de surveillance, l'ensemble de détection comprenant une pluralité de dispositifs de détection. Avantageusement, le système de détection comprend :

- une unité de détermination de matrice de taux de transition configurée pour estimer une matrice de taux de transition, pour chaque groupe candidat parmi un ou plusieurs groupes candidats de dispositifs de détection de l'ensemble, en effectuant une phase d'apprentissage à base de chaînes de Markov cachées (HMM), à partir d'un jeu de données initiales indiquant des états d'activité des dispositifs de détection de l'ensemble de détection préalablement détectés et d'une modélisation de l'ensemble de détection, la matrice de taux de transition d'un groupe candidat comprenant des coefficients, chacun représentant une vitesse de transition d'un état d'activité à l'autre pour chaque dispositif de détection du groupe candidat associé,

- une unité de détermination de grandeurs caractéristiques de groupe configurée pour déterminer un ensemble de grandeurs caractéristiques pour chaque groupe candidat à partir de la matrice de taux de transition obtenue pour le groupe candidat, l'ensemble de grandeurs caractéristiques de groupe comprenant au moins une métrique de coopération relative à une entropie déterminée pour le groupe candidat ;

- une unité de détermination de regroupement configurée pour déterminer au moins un regroupement de dispositifs de détection à partir de l'ensemble de grandeurs caractéristiques de groupe déterminé pour chaque groupe candidat, un regroupement de détection comprenant au moins deux dispositifs de détection connectés en réseau et aptes à coopérer entre eux.

Le système de détection coopératif étant apte à utiliser un regroupement déterminé pour la surveillance de la zone de surveillance.

Dans des modes de réalisation, un coefficient de la matrice de taux de transition a un premier indice correspond à un état de départ et un deuxième indice correspondant à un état d'arrivée, la matrice de taux de transition étant une matrice carrée, la dimension de la matrice de taux de transition associée à un groupe candidat de taille $R$ étant définie par le nombre total $L^R$ d'états d'activité possibles pour tous les $R$ dispositifs de détection du groupe candidat, chaque dispositif de détection ayant un nombre $L$ d'états d'activité.

Selon certains aspects, le système peut comprendre en outre une unité de détermination de règles d'enchaînement d'états configurée pour déterminer des règles d'enchaînement d'états pour chaque regroupement déterminé, à partir des matrices de taux de transition déterminées par l'unité de détermination de matrice de taux de transition pour les groupes candidats comprenant au moins un dispositif de détection du regroupement et d'un poids associées aux matrices de taux de transition, les règles d'enchaînement d'états déterminées pour un regroupement définissant les transitions d'états d'activité des dispositifs de détection du regroupement, le système de détection coopératif étant apte à contrôler chaque regroupement déterminé pour la surveillance de la zone de surveillance, selon les règles d'enchaînement d'états déterminées pour le regroupement.

La zone de surveillance peut être située autour des dispositifs de détection de l'ensemble de détection.

Dans des modes de réalisation, l'unité de détermination de valeurs caractéristiques de groupe peut être configurée pour déterminer une matrice de probabilités à partir de la matrice de taux de transition associé à un groupe candidat, en normalisant les termes non diagonaux de chaque ligne de la matrice de taux de transition de sorte que leur somme soit unitaire, ce qui fournit un vecteur de probabilités $V_i$ pour chaque ligne i de la matrice de taux de transition, comprenant des valeurs de probabilités, chacune en correspondance avec un des termes de la ligne i de la matrice de taux de transition, à l'exception du terme diagonal, lesdites valeurs de probabilité $p_{ik}$ du vecteur de probabilités $V_i$ obtenu pour une ligne i représentant les probabilités de transitions vers un état d'arrivée, les vecteurs de probabilités $V_i$ obtenus pour toutes les lignes de la matrice de taux de transition formant les lignes de ladite matrice de probabilités P, la métrique de coopération relative à une entropie du groupe candidat étant calculée à partir de la matrice de probabilité.

Le calcul de la métrique de coopération relative à une entropie du groupe candidat peut comprendre, pour chaque ligne i de la matrice de probabilités P, la détermination d'une valeur d'entropie, les valeurs d'entropie déterminées pour les différentes lignes de la matrice de probabilités formant un vecteur d'entropie $\mathcal{H}$ comprenant des valeurs d'entropie $h_i$ associée à chaque ligne i de la matrice de probabilités P, la métrique de coopération relative à une entropie du groupe candidat étant déterminée à partir du vecteur d'entropie $\mathcal{H}$.

Dans des modes de réalisation, la valeur d'entropie $h_i$ associée à une ligne i de la matrice de probabilités P peut être une entropie de Shanon, déterminée selon l'équation suivante :

$$h_i = -\sum_{k=1}^{N-1} p_{ik} \ln p_{ik}$$

Selon un aspect, la métrique de coopération peut être une moyenne d'entropie calculée en effectuant une moyenne des composantes du vecteur d'entropie $\mathcal{H}$, pondérée en appliquant un coefficient de pondération $\alpha_j$ à chaque composante $h_j$ du vecteur d'entropie $\mathcal{H}$.

Système de détection coopératif selon la revendication 8, dans lequel les coefficients de pondération $\alpha_j$ constituent les composantes d'un vecteur $\eta$ d'état stationnaire moyen défini par :

$$\eta = \frac{1}{n} \exp(\tau. M^T) \begin{pmatrix} 1 \\ \vdots \\ 1 \end{pmatrix},$$

où n désigne la dimension de la matrice de taux de transition M et $\tau$ est un paramètre représentant une valeur de temps.

Le paramètre de temps $\tau$ peut être égal à $\tau = 10^3 \times \max(\lambda_i)$, $\lambda_i$ désignant les valeurs propres de la matrice de taux de transition.

L'ensemble de valeurs caractéristiques de groupe peut être triplet de valeur comprenant la liste $L_q$ des dispositifs de détection du groupe candidat $G_q$, l'entropie moyenne < $H_q$ >, et le nombre de mesures $K_q$ utilisées pour calculer la matrice de taux de transition.

Dans un mode de réalisation, l'unité de détermination de regroupement peut être apte à générer une représentation des groupes candidats sélectionnés dans l'ensemble de détection comprenant n dispositifs de détection, sous la forme d'un système mécanique, dans l'espace de représentation de dimension n - 1, à partir du triplet de valeurs déterminé pour chaque groupe candidat {$L_q$, $\langle \mathcal{H}_q \rangle$, $K_q$}, et dans lequel :

- chaque dispositif de détection d'un groupe candidat est représenté par un point dans l'espace de représentation,

- pour chaque groupe candidat comprenant une liste $L_q$ de p dispositifs de détection 200, le système mécanique comprend p liaisons élastiques reliant les points représentatifs des dispositifs de détection du groupe candidat au centre d'une hypersphère circonscrite aux p points, dans l'espace de représentation ;

- La longueur à vide l des p liaisons élastiques est définie par l'entropie moyenne $\langle \mathcal{H}_q \rangle$ ;

- la constante de raideur élastique $k$ des $p$ liaisons élastiques est proportionnelle au nombre $K_q$.

Selon certains aspects, le système mécanique peut comprendre en outre des forces de frottement de type amortissement élastique ou des forces de frottement de type frein en milieu fluide relatives à des coefficients de frottement choisis pour amener le système mécanique dans un état stable.

Dans des modes de réalisation, l'unité de regroupement peut être apte à faire évoluer le système mécanique vers un état stable en mettant en œuvre une résolution d'un système différentiel associé aux équations qui régissent le système mécanique.

Selon des aspects, l'unité de regroupement peut être apte à déterminer au moins un regroupement de dispositifs de détection en appliquant un algorithme de regroupement au système mécanique utilisant la distance entre les points représentatifs des dispositifs de détection dans le système mécanique, dans l'état stable.

Il est en outre proposé un procédé de détection coopératif pour surveiller une zone de surveillance en utilisant un ensemble de détection comprenant une pluralité de dispositifs de détection. Le procédé comprend les étapes consistant à:

- déterminer un ou plusieurs groupes candidats de dispositifs de détection de l'ensemble de détection,

- déterminer une matrice de taux de transition pour chaque groupe candidat en effectuant une phase d'apprentissage à base de chaînes de Markov cachées (HMM), à partir d'un jeu de données initial indiquant des états d'activité des dispositifs de détection de l'ensemble de détection préalablement détectés et d'une modélisation de l'ensemble de détection, la matrice de taux de transition d'un groupe candidat comprenant des coefficients, chaque coefficient représentant une vitesse de transition d'un état à l'autre pour chaque dispositif de détection du groupe candidat associé,

- déterminer un ensemble de grandeurs caractéristiques de groupe pour chaque groupe candidat à partir de la matrice de taux de transition obtenue pour le groupe candidat, l'ensemble de grandeurs caractéristiques de groupe comprenant au moins une métrique de coopération relative à une entropie calculée pour le groupe candidat;

- déterminer au moins un regroupement de dispositifs de détection à partir de l'ensemble de grandeurs caractéristiques de groupe déterminé pour chaque groupe candidat, un regroupement de détection comprenant au moins deux dispositifs de détection connectés en réseau et aptes à coopérer entre eux.

Le procédé de détection coopératif étant apte à utiliser chaque regroupement déterminé pour la surveillance de la zone de surveillance.

Brève Description des Figures

D'autres caractéristiques, détails et avantages de l'invention ressortiront à la lecture de la description faite en référence aux dessins annexés donnés à titre d'exemple et qui représentent, respectivement :

[Fig.1] - La figure 1 représente un système de détection coopératif selon des modes de réalisation.

[Fig.2] - La figure 2 représente un dispositif de contrôle, selon des modes de réalisation.

[Fig.3] - La figure 3 est un exemple de tableau d'observation d'état d'activité obtenu à partir d'un jeu de données observées.

[Fig.4] - La figure 4 illustre un exemple de découpage du tableau d'observation d'état en sous-matrices d'état.

[Fig.5] - La figure 5 illustre la génération de matrices de taux de transition à partir des deux sous-matrices d'état obtenues dans l'exemple de la figure 4.

[Fig.6] La figure 6 montre des diagrammes de transitions d'état obtenus à partir des deux exemples de matrices de taux de transition de la figure 4.

[Fig.7] - La figure 7 illustre le calcul de l'entropie moyenne pour un premier groupe candidat d'un ensemble de dispositifs de détection.

[Fig.8] - La figure 8 illustre le calcul de l'entropie moyenne pour un deuxième groupe candidat du même ensemble de dispositifs de détection que celui de la figure 7.

[Fig.9] - La figure 9 illustre le calcul de l'entropie moyenne pour un troisième groupe candidat du même ensemble de dispositifs de détection que celui de la figure 7.

[Fig.10] - La figure 10 illustre le calcul de l'entropie moyenne pour un quatrième groupe candidat du même ensemble de dispositifs de détection que celui de la figure 7.

[Fig.11] - La figure 11 est un exemple de système mécanique utilisé pour modéliser l'ensemble de détection à partir des grandeurs caractéristiques de groupe calculées pour les groupes candidats.

[Fig.12] - La figure 12 représente le système mécanique de la figure 11 après relaxation.

[Fig.13] - La figure 13 est un organigramme représentant le procédé de détection coopératif selon des modes de réalisation.

[Fig.14] - La figure 14 illustre une étape de la détermination de la logique d'enchaînement d'état d'un regroupement, selon un exemple de réalisation.

[Fig.15] - La figure 15 illustre une autre étape de la détermination de la logique d'enchaînement d'état d'un regroupement, selon l'exemple de réalisation de la figure 14.

Description détaillée de la demande

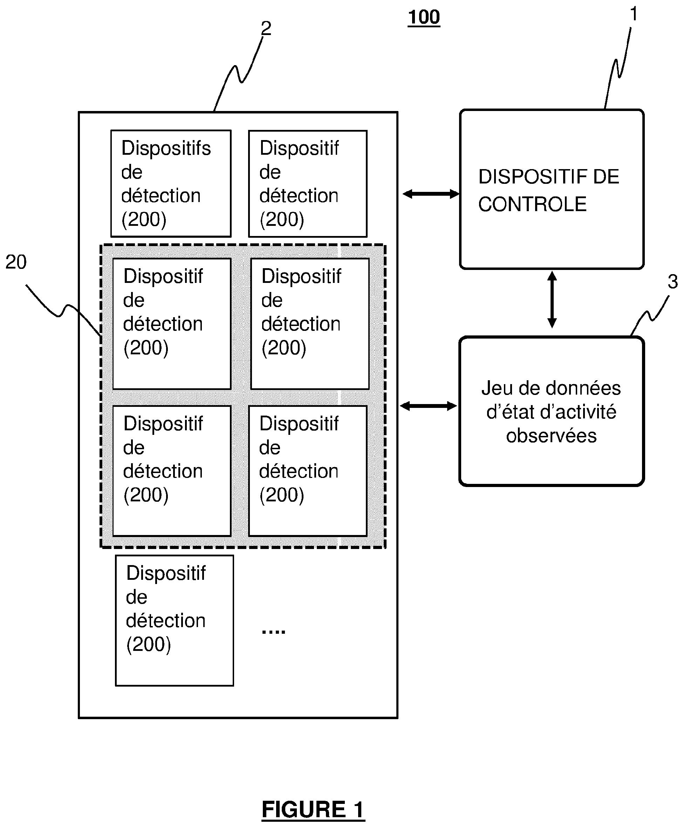

La figure 1 représente un système de détection coopératif 100 comprenant un ensemble de détection 2 comprenant une pluralité de dispositifs de détection 200 (au moins deux).

Le système de détection coopératif 100 est configuré pour déterminer un ou plusieurs regroupements de dispositifs de détection 200, un regroupement comprenant au moins deux dispositifs de détection 200 en réseau aptes à coopérer entre eux pour réaliser une mission de surveillance dans une zone de surveillance. La zone de surveillance peut par exemple être située autour des dispositifs de détection 200 (par exemple dans une zone de l'espace aérien).

Le système de détection coopératif 100 met en œuvre une surveillance active. Ainsi, chaque dispositif de détection 200 émet des ondes électromagnétiques (qui peuvent être des ondes radiofréquences ou optiques) ou des ondes acoustiques, et est configuré pour en déduire la présence d'un objet (détecter un objet ou plus généralement une cible) dans sa zone de détection en fonction du signal reçu en retour.

Un dispositif de détection 200 peut être par exemple un dispositif radar ou sonar.

L'ensemble de détection 2 peut par exemple comprendre une pluralité de dispositifs radars 200 au sol qui coopèrent pour observer le ciel (mission de surveillance).

La suite de la description sera faite principalement à une application de l'invention à des dispositifs de détection 200 de type radar, à titre d'exemple non limitatif.

Un dispositif de détection 200 a un état d'activité qui peut être un état actif ('ON') dans lequel le dispositif de détection est en émission ou dans un état inactif ('OFF') dans le cas contraire.

Le système de détection coopératif 100 comprend un dispositif de contrôle 1 configuré pour contrôler la coopération entre les différents dispositifs de détection 200 de l'ensemble de détection pour réaliser la mission de surveillance dans la zone de surveillance. Le dispositif de contrôle 1 est configuré pour déterminer au moins un regroupement de dispositifs de détection 200 à partir d'un jeu de données d'état 3 collectées (i.e. observées ou détectées) par au moins un observateur à différents instants passés, pour déterminer une logique d'enchaînement d'état pour chaque regroupement (encore appelées 'règles d'enchaînement d'état') et pour contrôler les dispositifs de détection 200 d'un regroupement 20, selon la logique d'enchaînement déterminée pour le regroupement pour réaliser la mission de surveillance dans la zone de surveillance.

Le dispositif de contrôle peut être agencé à tout endroit adapté et est apte à communiquer avec les différents dispositifs de détection 200 de l'ensemble 2 de détection.

Un dispositif de détection (en mode émission) 200 de l'ensemble 2 émet en effet des ondes qu'un observateur (i.e. dispositif récepteur) peut intercepter pour identifier une information d'état du dispositif de détection 200 à différents instant passés. Lorsque l'observateur est à proximité suffisante, il peut obtenir, pour chaque dispositif de détection 200 qui est en émission, un chronogramme associé indiquant l'état d'activité (« actif » ou « inactif ») du dispositif de détection 200. Le chronogramme peut être un enchaînement d'éléments booléens (du type vrai/faux) au cours du temps. Si l'observateur se déplace au cours du temps (par exemple récepteur monté dans un aéronef), sa distance par rapport aux différents dispositifs de détection 200 fluctue, si bien que l'information booléenne sur l'état d'activité des dispositifs de détection n'est pas toujours disponible. En effet, une non-détection ne signifie pas nécessairement que le dispositif de détection émetteur est inactif et peut indiquer qu'il est hors de portée. Dans ce cas, l'information de détection obtenue par l'observateur à cet instant est une information de non disponibilité de l'information. Ainsi, le jeu de données d'état utilisé par le dispositif de contrôle 1 (et issues des observations collectées par au moins un observateur à différents instants) peut comprendre différentes valeurs relatives à l'état d'activité de chaque dispositif de détection 200 de l'ensemble 2, correspondant à différents instants de détection passés. Une valeur relative à un état d'activité est ainsi associée à un dispositif de détection donné 200 et à un instant de détection et peut prendre une valeur parmi :

- une première valeur V1 indiquant un état d'activité (ou état « ON ») du dispositif (i.e. indiquant que le dispositif de détection est en fonctionnement ou allumé) ;

- une deuxième valeur V2 indiquant un état d'inactivité (« ou état OFF ») du dispositif (i.e. indiquant le dispositif de détection est éteint) ; ou

- une troisième valeur V3 indiquant une information d'indisponibilité de l'état d'activité lorsque l'état d'activité du dispositif n'a pu être déterminé à l'instant considéré. La troisième valeur V3 indique ainsi un état indéterminé caractérisant l'absence d'information, qui peut être notée par exemple 'N/A' (Not Available) ou NaN (Not a Number). Dans la suite de la description, la troisième valeur sera désignée par « NaN » à titre d'exemple non limitatif.

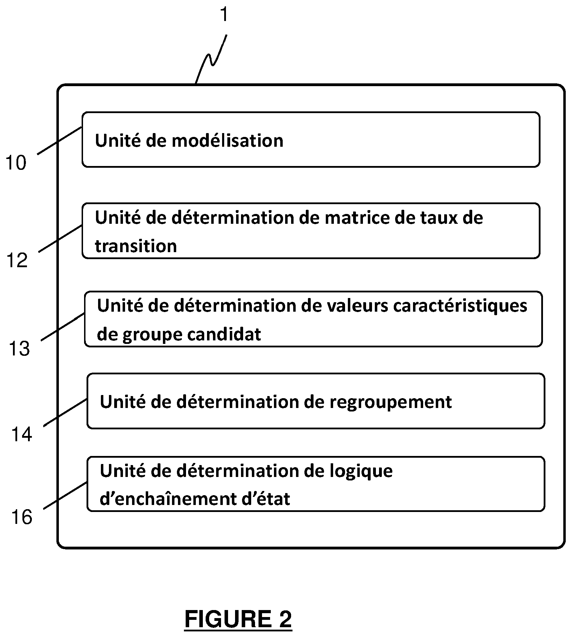

La figure 2 représente schématiquement le dispositif de contrôle 1 selon certains modes de réalisation.

Le dispositif de contrôle 1 comprend une unité de modélisation 10 apte à fournir une modélisation de l'ensemble de détection 2 comprenant n dispositifs de détection 200 sous la forme d'un macro-système passant d'un état à un autre dès qu'un dispositif de détection 200 commute de l'état actif ('ON') vers l'état inactif ('OFF') ou inversement.

L'unité de modélisation 10 est apte à fournir une modélisation de l'enchaînement des états de fonctionnement d'un dispositif de détection donné 200 sous la forme d'un tableau d'observation d'états.

Un dispositif de détection 200 peut avoir un mode de fonctionnement de type recherche de cible, dans lequel le dispositif de détection 200 est configuré pour détecter une cible (objet par exemple) dans la zone de surveillance, et un mode de fonctionnement de type poursuite, dans lequel un dispositif de détection 200 mesure les coordonnées d'une cible détectée et utilise les informations mesurées pour déterminer la trajectoire de la cible et/ou, prédire sa position future.

Avantageusement, le dispositif de contrôle 1 est configuré pour effectuer cette modélisation de l'enchaînement des modes de fonctionnement non pas du point de vue d'un seul dispositif de détection 200 considéré isolément mais du point de vue de la coopération entre les différents dispositifs de détection 200 de l'ensemble de détection 2. Les modes de réalisation de l'invention utilisent avantageusement des chaînes de Markov cachées (HMM, acronyme pour l'expression anglo-saxonne correspondante 'Hidden Markov Model') pour contrôler les coopérations (ou collaborations) entre plusieurs dispositifs de détection 200 de l'ensemble de détection 2 et déterminer au moins un regroupement de dispositifs de détection 200.

Le dispositif de contrôle 1 comprend en outre une unité de détermination de matrice de taux de transition 12 configurée pour déterminer une matrice de taux de transition $M_q$, pour chaque groupe candidat parmi un ou plusieurs groupes candidats $G_q$ de dispositifs de détection 200 de l'ensemble 2, en effectuant une phase d'apprentissage à base de chaînes de Markov cachées (HMM), à partir du jeu de données 3 indiquant des observations d'états d'activité des dispositifs de détection de l'ensemble de détection 2 (états d'activité préalablement détectés à différents instants précédents) et de la modélisation de l'ensemble de détection 2 fournie par l'unité de modélisation 10. La phase d'apprentissage à base de chaînes de Markov cachées (HMM) comprend une étape d'échantillonnage des données qui peut être à pas de temps variable ou à pas de temps constant.

La matrice de taux de transition d'un groupe candidat $G_q$ comprend des coefficients, chaque coefficient représentant une vitesse de transition d'un état à l'autre déterminée pour le groupe candidat associé. Un coefficient de la matrice de taux de transition a un premier indice correspondant à un état de départ (indice de ligne par exemple) et un deuxième indice correspondant à un état d'arrivée (indice de colonne par exemple).

Le dispositif de contrôle 1 comprend également une unité de détermination de valeurs caractéristiques de groupe 13 configurée pour déterminer un ensemble de valeurs caractéristiques pour chaque groupe candidat $G_q$ à partir de la matrice de taux de transition $M_q$ obtenue pour le groupe candidat $G_q$. L'ensemble de valeurs caractéristiques de groupe peut être un P-uplet comprenant au moins une grandeur relative à une entropie calculée (encore appelée 'métrique de coopération') pour le groupe candidat $G_q$. Dans un mode de réalisation, la métrique de coopération peut être une entropie moyenne. Le P-uplet peut alors être par exemple un triplet de valeurs (P=3) comprenant la liste $L_q$ des dispositifs de détection 200 du groupe candidat $G_q$, l'entropie moyenne $< H_q >$ et le nombre d'états $K_q$ associés à la matrice de taux de transition $M_q$ (nombre d'états possibles total du groupe candidat correspondant à la matrice de taux de transition).

Le dispositif de contrôle comprend également une unité de détermination de regroupement 14 (encore appelée ci-après « unité de regroupement ») configurée pour déterminer au moins un regroupement de dispositifs de détection 200 qui appartiennent à un même réseau de coopération à partir de l'ensemble de valeurs caractéristiques de groupe obtenues pour chaque groupe candidat.

Le dispositif de contrôle 1 peut comprendre une unité de détermination de logique d'enchaînement d'états 16 (encore appelées « règles d'enchaînement d'états ») configurée pour déterminer la logique d'enchaînement d'états au sein d'un même regroupement de dispositifs de détection 200, pour chaque regroupement déterminé par l'unité de regroupement 14 à partir des matrices de taux de transition déterminées par l'unité de détermination de matrice de taux de transition 12. La logique d'enchaînement d'états déterminée pour un regroupement définit les transitions d'états d'activité des dispositifs de détection du regroupement.

Pour modéliser les dispositifs de détection 200, l'unité de modélisation 10 considère le point de vue d'au moins un observateur mobile (récepteur apte à recevoir les ondes émises par les dispositifs de détection 200) qui se déplace dans une zone géographique où sont disposés les n dispositifs de détection 200 formant l'ensemble de détection 2, et à partir duquel est obtenu le jeu de données d'état d'activité 3. L'ensemble de détection 2 correspond ainsi à l'ensemble des dispositifs de détection 200 qui sont situés dans cette zone géographique qui est choisie en fonction de la zone de surveillance, certains des dispositifs de détection 200 dans cet ensemble de détection 2 sont configurés pour coopérer entre eux (dispositifs dits « en réseau »).

Du fait de la mobilité de l'observateur, l'observateur peut disposer d'informations insuffisantes quant à l'état d'activité des différents dispositifs de détection 200 de sorte que le jeu de données d'état observées par un observateur à différents instants peut comprendre les valeurs d'information d'état V1, V2 ou V3.

Il est à noter que la position des dispositifs de détection 200 ne varie généralement que très peu dans le temps. Il est supposé par ailleurs que la position des différents dispositifs de détection 200 est connue. En situation réelle, la position de l'observateur (récepteur en survol par exemple) peut être ajustée de manière à pouvoir être à l'écoute des émissions de tous les dispositifs de détection 200. Le dispositif de contrôle 1 selon les modes de réalisation de l'invention peut déterminer le regroupement optimal de dispositifs de détection 200 en n'utilisant que les informations relatives à l'état d'activité des dispositifs de détection (première valeur V1 en cas d'activité, deuxième valeur en cas d'inactivité ou troisième valeur V3 en cas d'information indisponible), et n'utilise pas d'information sur les trajectoires des cibles détectées.

Dans un mode de réalisation, le jeu de données d'états d'activité 3 observé peut être modélisé sous la forme d'un tableau d'observation d'états d'activité qui représente à chaque instant (chaque ligne du tableau correspond à un instant de détection) les différents états observés des dispositifs de détection 200 de l'ensemble de détection 2 (chaque colonne correspond à un dispositif de détection de l'ensemble 2), situés dans la zone géographique d'intérêt, ces états étant représentés dans le tableau d'observation d'états par une valeur d'état en fonction de l'état d'activité du dispositif de détection 200 considéré. La valeur d'état peut être une valeur booléenne prenant la première valeur V1 (par exemple 1) ou la deuxième valeur V2 (par exemple 0) selon que le dispositif de détection 200 est actif (valeur 1) ou non (valeur 0), ou la troisième valeur V3 (« NaN » par exemple) indiquant que les informations d'activité du dispositif de détection 200 ne sont pas disponibles.

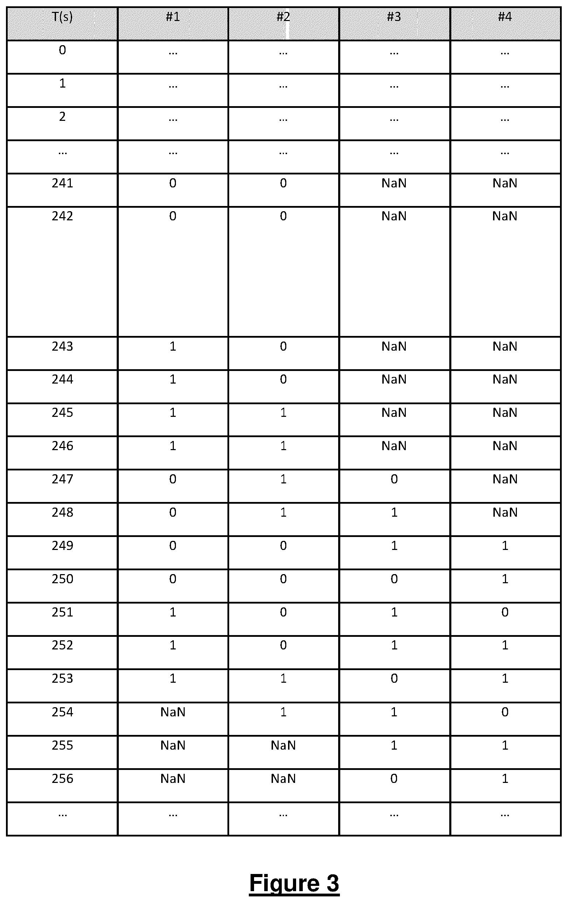

La figure 3 illustre un exemple de tableau d'observation d'états d'activité. Dans l'exemple de la figure 3, il est considéré quatre dispositifs de détection 200 dans la scène (#1, #2, #3, #4) et différents instants pour lesquels l'état d'activité de chaque dispositif de détection 200 est indiqué. Par exemple, à l'instant t=241 s, les dispositifs de détection #1 et #2 sont inactifs (valeur « 0 »), mais aucune information d'état n'est disponible (valeur « NaN ») sur l'état d'activité des dispositifs de détection #3 et #4. De même, à l'instant t=254 s, aucune information sur l'état d'activité du dispositif de détection #1 n'est disponible (valeur « NaN ») tandis que les dispositifs de détection #2 et #3 sont actifs (valeur « 1 ») et que le dispositif de détection #4 n'est pas actif (valeur « 0 »).

Un découpage est ensuite appliqué au tableau d'observation d'état d'activité correspondant à l'ensemble de détection 2 de manière à extraire un ensemble de sous-matrices d'état, chacune correspondant à un groupe de dispositifs de détection candidat. Plus précisément, le découpage du tableau d'activité en sous-matrices d'état est effectué de sorte que chaque sous-matrice d'état soit une matrice rectangulaire correspondant à une zone du tableau d'observation d'état, définie par le recoupement d'un ensemble de lignes et d'un ensemble de colonnes, dépourvue d'éléments d'indisponibilité d'information d'état (troisième valeur V3 d'information d'état telle que « NaN » par exemple). Une sous-matrice du tableau d'observation d'état ne comporte donc que des valeurs d'état d'activité (première valeur V1 telle que la valeur 1) et/ou des valeurs d'état d'inactivité (deuxième valeur V2 telle que la valeur 0). Elle peut être constituée d'éléments issus de colonnes ou de lignes du tableau continues ou non. Une sous-matrice d'état correspond ainsi à des informations d'état d'au moins deux dispositifs de détection 200 de l'ensemble de détection 2 (i.e. comporte des éléments d'au moins deux colonnes du tableau d'observation d'état initial).

Chaque sous-matrice d'état ainsi obtenue correspond à un groupe candidat 20 de dispositifs de détection 200 et fournit les informations d'état d'activité du groupe candidat issues des données d'état 3, à différents instants t du tableau d'observation d'état initial, sans inclure aucune information indéterminée (i.e. troisième valeur V3 d'information d'état d'activité indiquant que l'état d'activité est indisponible telle que « NaN »).

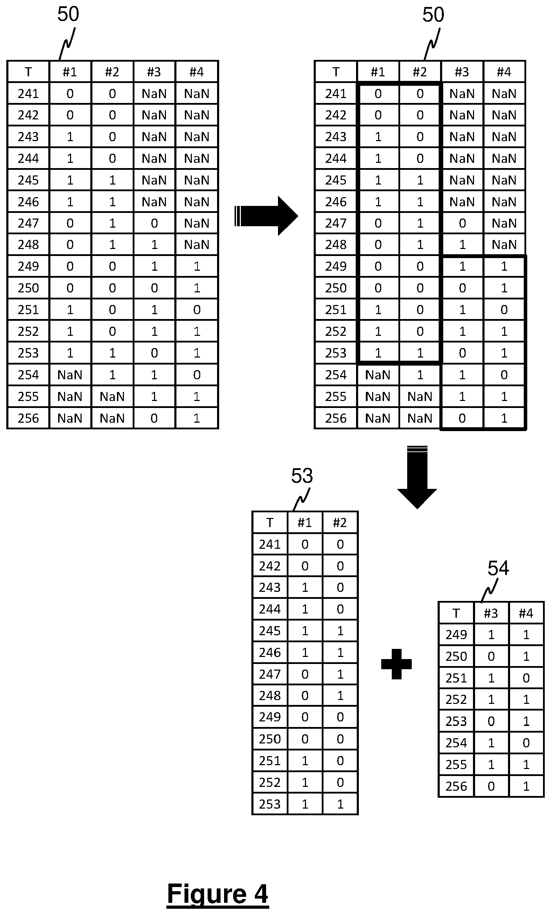

La figure 4 illustre un exemple de découpage d'un tableau d'observation d'état 50 en deux sous-matrices d'état 53 et 54 correspondant à deux groupes candidats. Le découpage en sous-matrices d'état peut être réalisé de manière à isoler autant de sous-matrices rectangulaires dépourvues d'éléments « NaN » (troisième valeur V3 d'information d'état d'activité) que possible pour différentes combinaisons de dispositifs de détection 200. Ce découpage peut être réalisé de manière à avoir des sous-matrices d'état aussi grandes que possible, chaque sous-matrice d'état correspondant à un groupe candidat de dispositifs de détection 200.

Dans l'exemple de la figure 4, la sous-matrice d'état 53 correspond aux lignes du tableau d'observation d'état 50 comprises entre t=241 et t=253 et aux deux premières colonnes du tableau d'observation d'état 50 correspondant aux dispositifs de détection #1 et #2. La sous-matrice d'état 53 correspond à un découpage rectangulaire tel que la sous-matrice 53 ne comporte que des éléments 0 (état inactif) ou 1(état actif). La sous-matrice d'état 53 est ainsi associée au groupe candidat de dispositifs de détection comprenant les dispositifs {#1, #2}.

La sous-matrice d'état 54 correspond aux lignes du tableau d'observation d'état comprises entre t=249 et t=256 et aux deux dernières colonnes du tableau d'observation d'état correspondant aux dispositifs de détection #3 et #4. Elle correspond également à un découpage rectangulaire tel que la sous-matrice 54 ne comporte que des éléments 0 (état inactif) ou 1 (état actif). La sous-matrice d'état 54 est ainsi associée au groupe candidat de dispositifs de détection comprenant les dispositifs {#3, #4}.

Le nombre de combinaisons utilisées pour déterminer les sous-matrices d'état peut varier et être aussi élevé que possible.

Chaque sous-matrice d'état ainsi obtenue (53 ou 54 par exemple) comprend un ensemble de vecteurs d'état, chaque vecteur d'état correspondant à une ligne de la sous-matrice d'état associée à un instant t, et représente l'état observé des différents dispositifs de détection 200 associés à la sous-matrice d'état. Le vecteur d'état comprend ainsi un ensemble de composantes, correspondant aux différents dispositifs de détection associés à la sous-matrice d'état, à l'instant considéré, chaque composante du vecteur d'état correspondant à une valeur observée d'état d'activité (prenant par exemple les valeurs booléennes 0 ou 1) du dispositif de détection 200 associé et indique si, à l'instant t considéré :

- le dispositif de détection est dans un état actif (valeur V1 telle que la valeur booléenne 1 par exemple), c'est-à-dire qu'il est dans un état d'émission (état 'ON'), ou

- le dispositif est dans un état inactif (valeur V2 telle que la valeur booléenne 0 par exemple), c'est-à-dire dans un état où il n'émet pas ("état OFF').

Dans l'exemple de la figure 4, le vecteur d'état correspondant à l'instant t=246 est '11' pour la sous-matrice 53.

Il convient de noter que bien que désignés par les expressions « sous-matrice d'état » et « vecteur d'état » à titre de simplification, ces structures de données correspondent respectivement à des sous-matrices d'observation d'états et à des vecteurs d'observation d'états. En effet, bien que la troisième valeur V3 d'information d'état d'activité qui indique que l'état d'activité est indisponible (« NaN » par exemple) soit supprimée de ces structures de données, les première et deuxième valeurs V1 et V2 (0 et 1 par exemple) peuvent correspondre à des faux positifs ou des faux négatifs, de sorte que les sous-matrices d'état et les vecteurs d'état (correspondant aux observations) peuvent ne pas correspondre exactement aux états réels.

Selon cette modélisation, un ensemble 2 de n dispositifs de détection peut être associé à un nombre d'états (les états des dispositifs 200 qu'il comprend) allant jusqu'à $2^n$ états possibles différents, dans les cas où chacun des n dispositifs peut avoir un état parmi deux états (état actif ou inactif).

Le vecteur d'état contient donc des valeurs booléennes traduisant l'activité ('ON') ou la non-activité ('OFF') observée d'un dispositif de détection 200.

A partir des sous-matrices d'état déterminées, associées à différents groupes candidats de dispositifs de détection, les modes de réalisation de l'invention permettent de déterminer une matrice de taux de transition pour chaque groupe candidat, puis au moins une grandeur caractéristique du groupe candidat à partir de la matrice de taux de transition, comprenant au moins une valeur relative à l'entropie du groupe candidat. Le dispositif de contrôle est ensuite apte à déterminer au moins un regroupement de dispositifs de détection 200 qui collaborent à partir des valeurs relatives à l'entropie des différents groupes candidats. Le dispositif de contrôle 1 peut en outre déterminer la logique d'enchaînement d'état associée à chaque regroupement à partir de la modélisation effectuée par l'unité de modélisation 10 et d'un apprentissage à base de HMM (modélisation sous la forme de matrices de taux de transition).

Dans le tableau d'observation d'état d'activité, il est supposé que les transitions d'un état d'activité à un autre se font indépendamment des variations de l'environnement, c'est-à-dire que quels que soient les résultats de mesures effectuées par les dispositifs de détection 200 (en émission), les enchaînements de commutations 'ON'/'OFF' restent inchangés, qu'ils soient rigoureusement déterministes ou probabilistes (i.e. il est supposé que l'ensemble des dispositifs de détection 200 continuent de fonctionner à leur rythme habituel qu'ils aient ou non détecté la présence d'un objet qui leur serait potentiellement hostile).

Bien que la description soit faite principalement en référence à une représentation booléenne (notamment binaire) de l'état d'activité des dispositifs de détection 200, l'homme du métier comprendra facilement que l'invention n'est pas limitée à une telle représentation booléenne de l'état d'activité d'un dispositif de détection 200 (selon laquelle le dispositif de détection peut avoir deux états d'activité). Plus généralement, un état d'un dispositif de détection 200 peut être caractérisé par un Q-uplet de valeurs d'état, les différentes valeurs du Q-uplet fournissant au moins l'état d'activité du dispositif de détection associé 200 et des informations complémentaires relatives à la détection d'objet effectuée par le dispositif de détection 200. Par exemple, le Q-uplet peut être une paire (Q=2) de valeurs d'états notées '$x_1 x_2$' où $x_1$ caractérise l'activité d'activité 'ON' ou d'inactivité 'OFF' du dispositif de détection 200 et $x_2$ caractérise la détection récente ou non d'un objet par le dispositif de détection 200 lui-même ou un de ses dispositifs de détection voisins. Dans cet exemple, il est supposé que le système de détection 100 ne réagit pas à une détection qui lui serait potentiellement hostile et qu'il continue donc à allumer (i.e. mettre à 'ON' ou à l'état actif) et à éteindre (mettre à 'OFF' ou à l'état inactif) son ensemble de dispositifs de détection 200 à son rythme habituel (c'est-à-dire sans tenir compte de la détection de l'objet). Ainsi, l'état d'activité ('ON' ou 'OFF') représenté par la valeur $x_1$ fournit seulement une indication sur le fait qu'un dispositif de détection 200 est en train d'émettre un signal (valeur V1 signifiant qu'à la date considérée, le dispositif de détection est en train d'émettre une onde radar) ou non (valeur V2 signifiant qu'à la date considérée, le dispositif de détection n'est pas en train d'émettre une onde radar), tandis que la valeur $x_2$ vient compléter cette indication en fournissant une indication sur la détection d'un objet dans le voisinage du dispositif de détection.

Ainsi, dans cet exemple, l'état d'un dispositif de détection 100 peut prendre les valeurs '00' ($x_1=0$ indiquant un état inactif et $x_2=0$ indiquant une détection non récente), '01' ($x_1=0$ indiquant un état inactif et $x_2=1$ indiquant une détection récente), '10' ($x_1=1$ indiquant un état actif et $x_2=0$ indiquant une détection non récente), ou '11' ($x_1=1$ indiquant un état actif et $x_2=1$ indiquant une détection non récente). L'utilisation d'un tel Q-uplet de valeurs d'état peut ainsi prendre en compte la causalité qu'il peut y avoir entre une détection et l'activité des différents dispositifs de détection 200.

Les jeux de données d'état d'activité peuvent être mis à jour dynamiquement en fonction des états d'activité des dispositifs de détection 200 de l'environnement 2, détectés par un observateur, l'unité de modélisation 10 pouvant mettre à jour le modèle périodiquement ou dynamiquement.

Le dispositif de contrôle 1 est ainsi apte à définir un ou plusieurs groupes candidats $G_q$ de dispositifs de détection 200 parmi les dispositifs de l'ensemble de détection 2, à partir du découpage du tableau d'observation d'état 50 en sous-matrices d'état (52, 53 par exemple) qui correspondent à plusieurs combinaisons de dispositifs de détection de l'ensemble de détection 2, selon différentes combinatoires.

L'unité de détermination de la matrice de taux de transition 12 est alors configurée pour déterminer une matrice de taux de transition associé à chaque groupe candidat $G_q$ correspondant à une sous-matrice d'état.

Pour déterminer la matrice de taux de transition associé à un groupe candidat $G_q$ de dispositifs de détection 200, l'unité de détermination de matrice de taux de transition 12 est apte à apprendre la logique d'enchaînement des commutations d'état des dispositifs de détection 200 de l'état actif vers l'état inactif et inversement ('ON'$\leftrightarrow$'OFF'), qui est « cachée » derrière les jeux de données d'état détectés en mettant en œuvre une phase d'apprentissage à base de chaînes de Markov cachées HMM et en utilisant les sous-matrices d'état dérivées du tableau d'observation d'état (et notamment les vecteurs d'état associés aux différents dispositifs de détection du groupe candidat). Cette logique d'enchaînement d'états apprise peut être ensuite utilisée par l'unité de regroupement 14 pour déterminer les regroupements de dispositifs de détection 200 qui coopèrent. L'état l'activité d'un dispositif de détection 200 étant représenté par le vecteur d'état qui répertorie son activité dans une sous-matrice d'état, il peut y avoir jusqu'à $2^n$ valeurs d'état d'activité différentes utilisées dans la phase d'apprentissage, $n$ étant le nombre de dispositifs de détection 200 présents dans l'environnement 2, dans le cas où un dispositif a deux états d'activité possibles.

L'ensemble des dispositifs de détection 200 de l'ensemble de détection 2 se comporte donc comme une machine à états, l'unité de détermination de la matrice de taux de transition 12 étant apte à reconstituer la logique de transition d'état et la temporalité de cette machine d'état. En particulier, pour chaque état, l'unité de détermination de la matrice de taux de transition 12 est apte à déterminer au bout de combien de temps chaque dispositif de détection 200 quitte cet état, vers quel(s) état(s) il va évoluer ou bien il est probable qu'il évolue (un seul état dans un cas déterministe ou un choix parmi plusieurs états dans le cas probabiliste), les informations déterminées étant alors structurées dans une matrice de taux de transition qui représente les transitions entre états d'activité pour chaque dispositif de détection du groupe candidat $G_q$ considéré.

La détermination de la matrice de taux de transition à partir des vecteurs d'états peut par exemple être déterminée en utilisant une modélisation HMM.

La modélisation HMM est un processus itératif qui converge vers une matrice fournissant les vitesses de transitions d'un état à un autre. Le processus HMM itératif est utilisé par l'unité de détermination de matrice de taux de transition 12 pour modéliser l'enchaînement des états d'activité des dispositifs de détection 200.

Le processus HMM itératif appliqué par l'unité de détermination de matrice de taux de transition 12 peut utiliser l'algorithme décrit dans LIU, Yu-Ying, MORENO, Alexander, XU, Maxwell A., et al. Efficient Learning and Decoding of the Continuous-Time Hidden Markov Model for Disease Progression Modeling. arXiv preprint arXiv:2110.13998, 2021, prévu pour suivre l'évolution d'une maladie, soit en temps continu (c'est-à-dire que l'échantillonnage des données est effectué à pas de temps variable) comme prévu dans cet article, soit en l'adaptant pour fonctionner à pas de temps constant. Cet algorithme utilise notamment, dans une étape, le procédé décrit dans RABINER, Lawrence R. A tutorial on hidden Markov models and selected applications in speech recognition. Proceedings of the IEEE, 1989, vol. 77, no 2, p. 257-286 (RABINER).

L'algorithme à base de HMM décrit dans LIU, Yu-Ying, MORENO, Alexander, XU, Maxwell A., et al. Efficient Learning and Decoding of the Continuous-Time Hidden Markov Model for Disease Progression Modeling. arXiv preprint arXiv:2110.13998, 2021 (LIU *et al*), en particulier à la page 12, prend en entrée des observations à différents instants et un ensemble d'états possibles.

Pour appliquer ce procédé, l'unité de détermination de matrice de taux de transition 12 peut prendre en entrée une sous-matrice d'état (observations à différents instants), et l'ensemble des $2^n$ états possibles de l'ensemble de détection 2. Le procédé appliqué détermine ensuite le nombre de fois où une transition d'un état de départ à un autre a lieu, et au bout de combien de temps en moyenne, ce qui permet de déterminer une matrice de taux de transition initiale. Ensuite, à partir de la matrice de taux de transition initiale, l'unité de détermination de matrice de taux de transition 12 applique l'algorithme HMM itératif, qui utilise dans sa sixième étape le procédé décrit dans RABINER, Lawrence R. A tutorial on hidden Markov models and selected applications in speech recognition. Proceedings of the IEEE, 1989, vol. 77, no 2, p. 257-286 (RABINER) en temps continu (échantillonnage des données est effectué à pas de temps variable) ou à pas de temps constant. Chaque itération de l'algorithme itératif à base de HMM fournit une matrice de taux de transition courante.

Entre deux instants d'observations consécutives de la sous-matrice, l'unité de détermination de matrice de taux de transition 12 peut prendre en compte toutes les probabilités d'évolutions de l'état considéré entre ces deux observations. Potentiellement, un état aurait pu changer un grand nombre de fois en passant par une multitude d'états possibles entre deux observations. L'unité de détermination de matrice de taux de transition 12 peut prendre en compte tous les chemins possibles qui ont pu se produire entre deux observations. Les probabilités de chaque chemin sont régies par l'estimation courante de la matrice de taux de transition. L'algorithme décrit dans LIU, Yu-Ying, MORENO, Alexander, XU, Maxwell A., et al. Efficient Learning and Decoding of the Continuous-Time Hidden Markov Model for Disease Progression Modeling. arXiv preprint arXiv:2110.13998, 2021 peut être ainsi appliqué pour permettre, à l'aide de toutes les observations d'une sous-matrice d'état, de faire converger l'estimation courante de la matrice de taux de transition pour qu'elle soit la plus vraisemblable compte-tenu de toutes les observations faites. L'algorithme itératif est arrêté s'il est détecté que la vraisemblance de l'estimation courante de la matrice de taux de transition ne varie plus beaucoup d'une itération à l'autre, puisque dans ce cas il est considéré que cette estimation est suffisamment bonne (la variation de la vraisemblance de l'estimation entre l'itération courante et l'itération précédente peut par exemple être comparée à un seuil prédéfini et si elle est inférieure à ce seuil, la condition d'arrêt du procédé est atteinte, i.e. les itérations sont arrêtées et la matrice de taux de transition courante obtenue à l'itération courante est retournée en tant que matrice de taux de transition 12). La détermination de la matrice de taux de transition 12 selon les algorithmes précités, prend notamment en compte la probabilité de faux positifs et de faux négatifs dans la sous-matrice d'état d'entrée.

La matrice de taux de transition obtenue pour un groupe candidat $G_q$ est une matrice comprenant un ensemble de lignes, chaque ligne comprenant un ensemble de coefficients. Chaque ligne correspond à un état de départ.

Les coefficients associés à une ligne de la matrice de taux de transition indiquent la vitesse à laquelle un dispositif de détection du groupe candidat arrive dans un autre état depuis un état d'arrivée).

La vitesse représentée par un coefficient de la matrice de taux de transition est une vitesse de passage, donc en $s^{-1}$, ou bien en « état/s » (état par seconde).

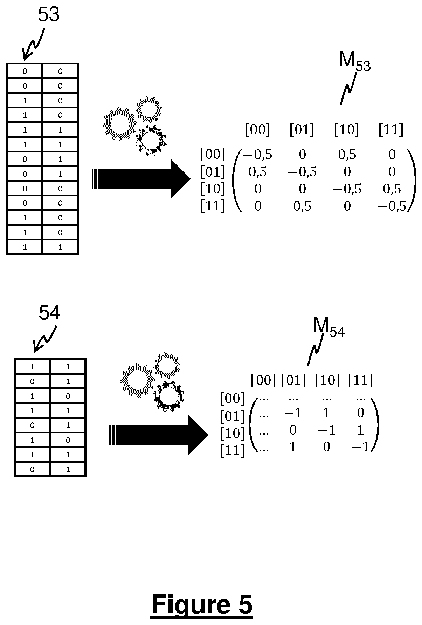

La figure 5 illustre les matrices de taux de transition obtenue pour chaque candidat $G_{53}$ et $G_{54}$ correspondant respectivement au sous-matrices d'état 53 et 54 de la figure 4 issue du découpage du tableau d'observation d'état 50, à titre d'exemple illustratif. La figure 5 ne montre que les vecteurs d'état tirés respectivement des sous-matrices d'état 53 et 54 (composantes représentant les états d'activité sous une forme booléenne).

Les coefficients associés à une ligne de la matrice de taux de transition (par exemple $M_{53}$ et $M_{54}$) indiquent la vitesse à laquelle un dispositif de détection du groupe candidat (par exemple $G_{53}$ et $G_{54}$ respectivement) arrive dans un autre état depuis un état d'arrivée.

Par exemple, le coefficient d'indice (2,1) (deuxième ligne, première colonne) de la matrice $M_{53}$ a pour valeur 0,5, ce qui signifie que depuis l'état 2 (numéro de ligne), on va vers l'état 1 (numéro de colonne) à la vitesse de 0,5 $s^{-1}$. Il faudra donc 2 secondes pour y arriver.

Le coefficient d'indice (1,1) (première ligne, première colonne) de la matrice $M_{53}$ a pour valeur -0,1, ce qui signifie que depuis l'état 1 (numéro de ligne), on va vers l'état 1 (numéro de colonne) à la vitesse de -0,1$s^{-1}$. Le signe « - » signifie qu'on quitte cet état. La valeur 0,1 signifie qu'il faut donc 10 secondes pour le quitter.

Les colonnes de la matrice de taux de transition (e.g. $M_{53}$ et $M_{54}$) correspondent ainsi à différents états d'arrivée possibles de l'ensemble de détection 2 tandis que les lignes correspondent à différents états de départ.

Par construction, les termes diagonaux de la matrice de taux de transition (par exemple $M_{53}$ et $M_{54}$) sont négatifs

et la somme des éléments d'une même ligne est nulle. La ligne 'k' d'une matrice de taux de transition indique que depuis l'état 'k', on va vers l'état 'l' correspondant à l'indice de la colonne. Ainsi depuis un état 'k', il n'est pas possible d'aller vers ce même état et il est uniquement possible de le quitter, quelle que soit la vitesse, qu'elle soit rapide ou lente. Quitter un état revient à « y aller à reculons », d'où l'utilisation d'un signe négatif. Ainsi, par construction, une composante sur la diagonale de la matrice de taux de transition, d'indice (k, k), est négative ou éventuellement nulle si l'on reste dans l'état éternellement. Par ailleurs, la somme au sein de chaque ligne vaut zéro ('0') puisque l'état 'k' est quitté avec la vitesse indiquée par le terme diagonal (k,k) et que l'on arrive dans chaque état possible suivant avec une vitesse cumulée qui égale à la vitesse de départ.

Selon un autre exemple, en considérant un ensemble de détection à $2^n=4$ états possibles (cas où l'ensemble 2 comprend deux dispositifs de détection 200 ayant chacun deux états possibles), un exemple de matrice de taux de transition peut être :

$$\begin{pmatrix} -0,1 & 0 & 0,1 & 0 \\ 0,5 & -0,5 & 0 & 0 \\ 0 & 0 & -0,25 & 0,25 \\ 0 & 0,33 & 0 & -0,33 \end{pmatrix}$$

Dans cet exemple de matrice, pour la première ligne, il peut être observé que, partant de l'état [1], état de départ correspondant à la première ligne, on arrive dans l'état [1], état d'arrivée correspondant à la première colonne, avec un taux de transition (vitesse) égal à -0,1 ($1^{er}$ coefficient de la première ligne de la matrice de taux de transition), et dans l'état [3] (état d'arrivée correspondant à la troisième colonne) avec un taux de 0,1 ($3^{ème}$ coefficient de la première ligne de la matrice de taux de transition). Autrement dit, l'état [1] est quitté au bout de 10s pour rejoindre l'état [3].

La matrice de taux de transition peut être une matrice carrée. La dimension de la matrice de taux de transition associée à un groupe candidat de taille R (i.e. nombre de dispositifs 200 du groupe candidat) est définie par le nombre total $L^R$ d'états d'activité possibles pour tous les R dispositifs de détection du groupe candidat, chaque dispositif de détection pouvant avoir le même nombre L d'états d'activité. Le cas $L = 2$ est le cas booléen. Si l'ensemble de détection 2 comprend $n$ dispositifs de détection 200, le nombre total d'états possibles étant alors au plus égal à $2^n$ états, la matrice de taux de transition est carrée, de taille $2^n \times 2^n$.

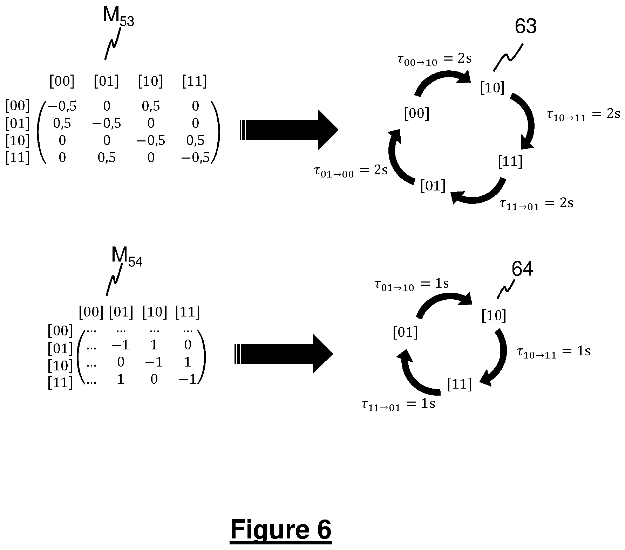

Chaque matrice de taux de transition ainsi obtenue traduit les mouvements d'états dans le groupe candidat associé, comme illustré par les diagrammes 63 et 64 de la figure 6 qui décrivent les transitions entre états correspondant aux matrices $M_{53}$ et $M_{54}$ des figures 4A et 4B.

La matrice de taux de transition calculée par apprentissage à partir du jeu de données d'état, peut être creuse ou non-creuse. Une matrice creuse comporte majoritairement des coefficients nuls (le pourcentage des coefficients non nuls est faible).

En particulier, si au sein d'une même ligne d'une matrice de taux de transition, seuls deux coefficients sont non nuls, et en particulier l'élément de la ligne situé sur la diagonale de la matrice (élément diagonal) et un autre élément quelconque de la ligne, cela indique que lorsque le dispositif de détection considéré 200 quitte un état, il arrive dans un autre état. Si en revanche, une ligne est remplie de valeurs de coefficients non nulles, il y a une incertitude sur l'état d'arrivée.

Un tel aspect creux de la matrice de taux de transition peut avantageusement être exploité par l'unité de regroupement 14 pour déterminer au moins un regroupement de dispositifs de détection 200.

Un regroupement de dispositifs de détection 200 fonctionne en réseau et a une logique d'enchaînement d'états déterministe ou n'incluant que peu d'aléas. Si la logique d'enchaînement d'états d'un regroupement de dispositifs de détection est parfaitement déterministe, cela signifie que si une matrice de taux de transitions est calculée à partir de dispositifs de détection 200 issus d'un même regroupement, cette matrice de taux de transition ne comporte que quelques rares éléments non nuls, à savoir les éléments diagonaux et un seul autre élément non nul par ligne.

Comme la matrice de taux de transition est issue d'une estimation obtenue à partir de mesures (données d'état observées) pouvant être entachées d'erreurs (par exemple dans les cas de non-détection ou de faux positifs), il n'est généralement pas obtenu de matrices de taux de transition dont la plupart des éléments (coefficients) sont rigoureusement nuls.

Par exemple, il peut être considéré une matrice $M_1$ correspondant à un groupe candidat $G_1$ et une matrice $M_2$ correspondant à un groupe candidat $G_2$ définies par les coefficients suivants :

$$M_1 = \begin{pmatrix} -0,104 & 0,001 & 0,1 & 0,003 \\ 0,5 & -0,5045 & 0,003 & 0,0015 \\ 0,0041 & 0,0012 & -0,2553 & 0,25 \\ 0,0009 & 0,33 & 0,002 & -0,3329 \end{pmatrix}$$

$$M_2 = \begin{pmatrix} -0,25 & 0,08 & 0,1 & 0,07 \\ 0,5 & -1,05 & 0,4 & 0,15 \\ 0,18 & 0,09 & -0,52 & 0,25 \\ 0,17 & 0,33 & 0,24 & -0,74 \end{pmatrix}$$

La matrice $M_1$ peut raisonnablement être considérée comme une matrice creuse de sorte qu'il peut être considéré que le groupe candidat $G_1$ correspondant utilise une logique déterministe. Dans le cas de la deuxième matrice $M_2$, il peut être considéré en revanche que la logique d'enchaînement d'états correspondante n'est pas déterministe.

Ainsi, il peut être considéré que la matrice de taux de transition $M_1$ est quasi-déterministe tandis que la matrice de taux de transition $M_2$ est plus aléatoire. Il est à noter qu'en pratique, il n'est quasiment pas possible d'obtenir rigoureusement des zéros puisque l'algorithme appliqué pour générer les matrices de taux de transition est un processus itératif qui permet un certain nombre d'itérations qui ne convergeraient vers 0 pour certains coefficients que si un nombre infini d'itérations était effectué, et qu'un critère d'arrêt est appliqué quand le résultat reste à peu près inchangé d'une itération à l'autre.

Pour un cas de matrice de taux de transition rigoureusement déterministe, il faudrait, pour chaque ligne, n'avoir que des zéros sauf deux termes, à savoir un terme diagonal et un autre. En pratique, la valeur n'est jamais rigoureusement égale à zéro mais presque égale à zéro. La matrice de taux de transition $M_1$ illustre un cas qui se rapproche beaucoup d'une matrice rigoureusement déterministe puisqu'il y a plusieurs ordres de grandeurs entre les termes qui pèsent et les autres au sein de chaque ligne.

Il peut donc être supposé que les données d'état 3 utilisées pour estimer la matrice de taux de transition $M_2$ émanent de dispositifs de détection 200 qui ne fonctionnent pas en réseau et inversement, dans le cas de la matrice de taux de transition $M_1$, il peut être supposé que les données d'état 3 utilisées émanent d'un regroupement fonctionnant en réseau.

L'unité de détermination de valeurs caractéristiques de groupe 13 est configurée pour déterminer un K-uplet de valeurs caractéristiques de groupe comprenant au moins une grandeur relative à l'entropie du groupe ('métrique de coopération') pour chaque groupe candidat $G_q$ dont la valeur indique à quel point une matrice de taux de transition associé au groupe candidat $G_q$ est creuse et ainsi le niveau de coopération des dispositifs de détection 200 du groupe candidat 20 considéré.

Pour déterminer le Q-uplet de valeurs caractéristiques de groupe (et ainsi déterminer si la logique d'enchaînement d'états d'une matrice de taux de transition est déterministe), l'unité de détermination de valeurs caractéristiques de groupe 13 peut être configurée pour balayer chaque ligne de la matrice de taux de transition et, pour chaque ligne, pour ne vérifier que les termes non diagonaux. En particulier, l'unité de détermination de valeurs caractéristiques de groupe 13 est configurée pour normaliser les termes non diagonaux de chaque ligne de la matrice de sorte que leur somme soit unitaire (opération de normalisation). Les étapes suivantes sont réalisées pour effectuer l'opération de normalisation pour chaque ligne *i* de la matrice de taux de transition:

- le terme diagonal de la ligne i est d'abord retiré tandis qu'on conserve les autres termes,
- chacun des termes restants de la ligne *i* (chaque terme sauf le terme diagonal), est ensuite divisé par la somme de tous les termes restants (le résultat de la division pouvant être arrondi au dixième près) de sorte que la somme des termes restant vaut 1, ce qui fournit un vecteur de probabilités $V_i$ comprenant des valeurs de probabilités, chacune en correspondance avec un des termes de la ligne i considérée de la matrice de taux de transition, sauf le terme diagonal (le vecteur de probabilités comprend donc 1 composante de moins que la ligne considérée). Les valeurs de probabilités du vecteur de probabilités $V_i$ obtenu pour la ligne i considérée représentent les probabilités de transitions vers un état d'arrivée (la liste des états probables suivants, sans information sur la vitesse).

Les différents vecteurs de probabilités $V_i$ obtenus pour toutes les lignes de la matrice de taux de transition forment une matrice de probabilités P (la i-ème ligne de la matrice de Probabilité est le vecteur $V_i$ obtenu pour la ligne *i* de la matrice de taux de transition).

Par exemple, en considérant les exemples de matrices $M_1$ et $M_2$, les probabilités 0de transition obtenues sont données par les matrices de probabilités $\mathcal{P}_1$ pour la matrice $M_1$ et $\mathcal{P}_2$ pour la matrice $M_2$:

$$\mathcal{P}_1 = \begin{cases} (0{,}0096 & 0{,}9615 & 0{,}0288) \\ (0{,}9911 & 0{,}0059 & 0{,}0030) \\ (0{,}0161 & 0{,}0047 & 0{,}9792) \\ (0{,}0027 & 0{,}9913 & 0{,}0060) \end{cases}$$

$$\mathcal{P}_2 = \begin{cases} (0{,}3200 & 0{,}4000 & 0{,}2800) \\ (0{,}4762 & 0{,}3810 & 0{,}1429) \\ (0{,}3462 & 0{,}1731 & 0{,}4808) \\ (0{,}2297 & 0{,}4459 & 0{,}3243) \end{cases}$$

La matrice de probabilités P ainsi obtenue pour une matrice de taux de transition comprend des coefficients de probabilité $p_{ik}$ représentant les probabilités de transition vers un état d'arrivée pour chaque ligne de la matrice de taux de transition (correspondant à un état de départ). L'unité de détermination de valeurs caractéristiques de groupe 13 peut alors estimer à quel point les probabilités convergent vers un même état d'arrivée à partir de la matrice de probabilités P.

En particulier, dans un mode de réalisation, l'unité de détermination de valeurs caractéristiques de groupe 13 peut être configurée pour déterminer l'entropie de Shannon $\mathcal{H}_i$ , qui quantifie l'étalement de la distribution de probabilités des états d'arrivée depuis un même état de départ. Une faible valeur d'entropie indique donc qu'il existe un état d'arrivée privilégié, tandis qu'une entropie forte marque l'absence d'état d'arrivée privilégié.

En supposant que la matrice de taux de transition est une matrice carrée de taille $N \times N$, la matrice de probabilités P comprend $N$ lignes, chaque ligne i étant associée à un vecteur $V_i$ comprenant N - 1 composantes représentant les coefficients de probabilité $p_{ik}$.

Pour chaque ligne i de la matrice de probabilités P, une valeur d'entropie est déterminée. Ainsi, pour la matrice de taux de transition de taille $N \times N$, $N$ valeurs d'entropie sont déterminées, avec une valeur d'entropie pour chaque ligne. Les $N$ valeurs d'entropie forment un vecteur d'entropie $\mathcal{H}$ comprenant des valeurs d'entropie $h_i$ associée à chaque ligne i de la matrice de probabilités P.

Dans un mode de réalisation, la valeur d'entropie $h_i$ associée à une ligne i de la matrice de probabilités P est une entropie de Shanon, déterminée selon l'équation (1) suivante :

$$h_i = -\sum_{k=1}^{N-1} p_{ik} \ln p_{ik} \ (1)$$

Chaque composante du vecteur d'entropie $\mathcal{H}$ est une valeur d'entropie correspondant à un état d'un dispositif de détection 200.

Le vecteur d'entropie $\mathcal{H}$ fournit donc autant de valeurs d'entropie que de nombres d'états.

Par construction, l'entropie $\mathcal{H}$ a une valeur minimale lorsque la distribution de probabilité est réduite à 100% en un endroit et 0% ailleurs. Elle est au contraire maximale dans le cas où les états d'arrivée sont équiprobables. Un tel vecteur d'entropie H indique ainsi si une logique d'enchaînement d'état d'un groupe candidat est plutôt déterministe ou aléatoire.

Dans un mode de réalisation, l'unité de regroupement 14 peut utiliser une métrique de coopération correspondant à une grandeur dérivée de ce vecteur d'entropie, telle que la moyenne $H_{moy}$ des composantes du vecteur d'entropie $\mathcal{H}$ , pour déterminer les regroupements optimaux de dispositifs candidats.

Dans les exemples de matrices de probabilités $\mathcal{P}_1$ et $\mathcal{P}_2$ obtenues respectivement pour les matrices $M_1$ et $M_2$, les vecteurs d'entropie $\mathcal{H}_1$ et $\mathcal{H}_2$ sont:

$$\mathcal{H}_1 = \begin{pmatrix} 0{,}1845 \\ 0{,}0566 \\ 0{,}1123 \\ 0{,}0553 \end{pmatrix}$$

$$\mathcal{H}_2 = \begin{pmatrix} 1{,}0876 \\ 0{,}9990 \\ 1{,}0229 \\ 1{,}0632 \end{pmatrix}$$

Dans un mode de réalisation, l'unité de détermination de valeurs caractéristique de groupe 13 peut déterminer une moyenne $H_{moy}$ des valeurs du vecteur d'entropie (encore appelée ci-après « entropie moyenne »), pour chaque matrice de taux de transition $M_q$ (correspondant à un groupe candidat $G_q$), en appliquant un coefficient de pondération $\alpha_j$ à chaque composante $h_j$ du vecteur d'entropie $\mathcal{H}$, pour $j$ compris entre 1 et le nombre d'états $N_q$ associés à la matrice de taux de transition $M_q$ selon l'équation (2):

$$H_{moy} = \frac{\Sigma_{j=1}^{N_i} \alpha_j h_j}{N_i} \ (2)$$

Dans un mode de réalisation, les valeurs d'entropie $h_j$ peuvent être pondérées en utilisant un vecteur $\eta$ représentant l'état stationnaire moyen comprenant des coefficients $\alpha_j$ a priori distincts.

Compte-tenu des matrices de taux de transition $M_q$ en calculant leur exponentielle avec un temps long, le vecteur d'état stationnaire moyen, qui est un mélange entre les $N_q$ états, peut être calculé selon la formule :

$$\eta = \frac{1}{N} \exp\!\left(\tau . M_q{}^T\right) \begin{pmatrix} 1 \\ \vdots \\ 1 \end{pmatrix} \ (3)$$

Dans l'équation 3, N désigne la dimension de la matrice de taux de transition $M_q$ (dans ce cas $N$ est au plus égal à $2^n$ et la taille de la matrice est alors égale à $2^n \times 2^n$) et $\tau$ désigne une « grande » valeur de temps. Par exemple, en notant $\lambda_q$ les valeurs propres de la matrice $M_q$ (i.e. racines du polynôme caractéristique de la matrice), $\tau$ peut être choisi égal à $\tau = 10^3 \times \max(\lambda_i)$.

Selon l'équation (3), en utilisant le vecteur $\eta$, l'entropie de chaque ligne peut être pondérée par la présence d'un état au fil du temps. Ainsi, un état revenant souvent pèsera plus qu'un état très rare.

En considérant l'exemple des deux matrices de taux de transition $M_1$ et $M_2$, qui sont de dimension n = 4, le coefficient d'état stationnaire moyen $\eta_1$ défini pour la matrice $M_1$ et le coefficient d'état stationnaire moyen $\eta_2$ défini pour la matrice $M_2$ sont:

$$\eta_1 = \frac{1}{4} \exp(\tau . M_1^T) \begin{pmatrix} 1 \\ 1 \\ 1 \\ 1 \end{pmatrix} = \begin{pmatrix} 0{,}5240 \\ 0{,}1070 \\ 0{,}2078 \\ 0{,}1612 \end{pmatrix} \ (4A)$$

et

$$\eta_2 = \frac{1}{4}\exp(\tau . M_2^T)\begin{pmatrix}1\\1\\1\\1\end{pmatrix} = \begin{pmatrix}0,4944\\0,1066\\0,2472\\0,1519\end{pmatrix}\ (4B)$$

Il est à noter que les exemples des matrices $M_1$ et $M_2$ sont utilisées pour illustrer deux cas extrêmes: un cas de matrice de taux de transition quasi-déterministe $M_1$ et un cas de matrice de taux de transition aléatoire $M_2$.

La pondération de la moyenne d'entropie est avantageuse car l'apport d'entropie est d'autant plus grand qu'elle concerne un état fréquemment atteint.

En tenant compte des valeurs $\eta_1$ et $\eta_2$, l'entropie moyenne $H_{moy}(M_1) = \langle \mathcal{H}_1 \rangle$ et l'entropie moyenne $H_{moy}(M_2) = \langle \mathcal{H}_2 \rangle$ correspondant respectivement à partir du vecteur d'entropie $\mathcal{H}_1$ obtenu pour $M_1$ et du vecteur d'entropie $\mathcal{H}_2$ obtenu pour $M_2$ sont alors égales à:

$$\langle \mathcal{H}_1 \rangle = 0,1350$$

$$\langle \mathcal{H}_2 \rangle = 1,0586$$

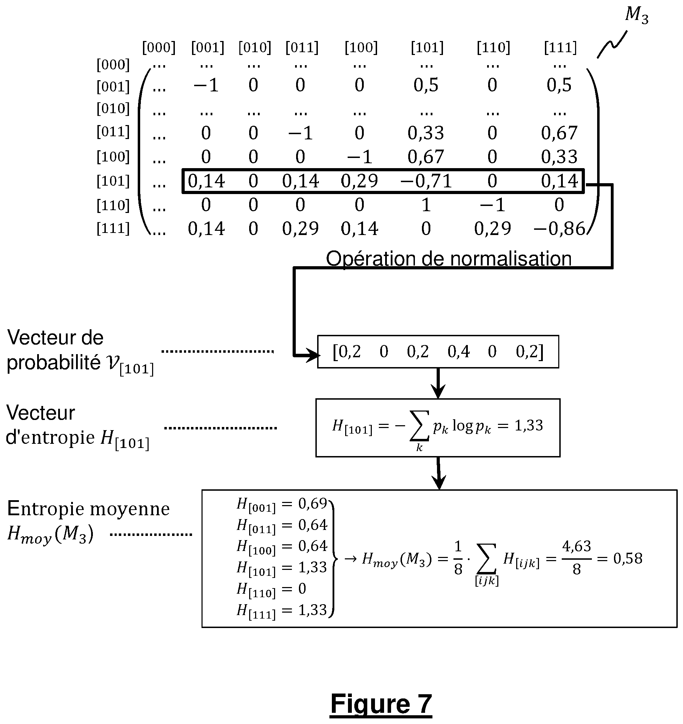

La suite de la description sera faite en référence à une métrique de coopération de type entropie moyenne $H_{moy}(M_q) = <H_q>$, pondérée par un coefficient d'état stationnaire moyen $\eta_2$, à titre d'exemple non limitatif. Les figures 7, 8, 9 et 10 illustrent la détermination de l'entropie moyenne pour quatre matrices de taux de transition $M_3$, $M_4$, $M_5$ et $M_6$ obtenues pour 4 groupes candidats distincts d'un même ensemble de dispositifs de détection 2 comprenant trois dispositifs de détection #1,#2,et #3, à partir d'un tableau d'observation d'état initial.

Plus précisément, la figure 7 illustre les étapes de détermination de l'entropie moyenne $H_{moy}(M_3)$, encore notée $\langle \mathcal{H}_3 \rangle$, dans le cas d'un autre exemple de matrice de taux de transition $M_3$ associée à un groupe candidat {#1,#2,#3}.

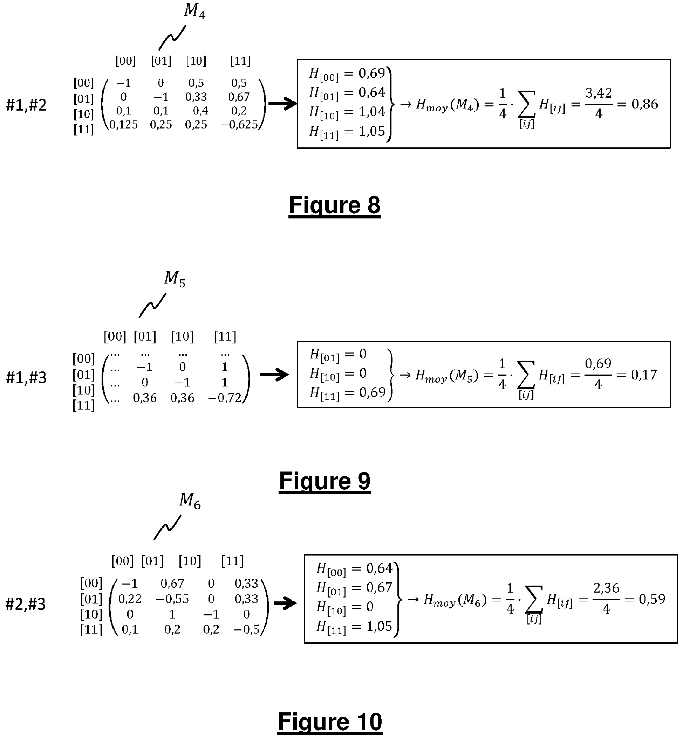

La figure 8 illustre l'étape de calcul de l'entropie moyenne $H_{moy}(M_4)$, encore notée $\langle \mathcal{H}_4 \rangle$, dans le cas d'un autre exemple de matrice de taux de transition $M_3$ associée à un deuxième groupe candidat {#1,#2}.

La figure 9 illustre les étapes de calcul de l'entropie moyenne $H_{moy}(M_5)$, encore notée $\langle \mathcal{H}_5 \rangle$, dans le cas d'un autre exemple de matrice de taux de transition $M_3$ associée à un troisième groupe candidat {#1,#3}.

La figure 10 illustre les étapes de calcul de l'entropie moyenne $H_{moy}(M_6)$, encore notée $\langle \mathcal{H}_6 \rangle$, dans le cas d'un autre exemple de matrice de taux de transition $M_4$ associée à un troisième groupe candidat {#2,#3}.

Ainsi, l'entropie obtenue pour les différents groupes est :

$\langle \mathcal{H}_3 \rangle$ = 0,58 pour le groupe candidat {#1, #2, #3} ;

$\langle \mathcal{H}_4 \rangle$ = 0,86 pour le groupe candidat {#1, #2} ;

$\langle \mathcal{H}_5 \rangle$ = 0,17 pour le groupe candidat {#1, #3} ;

$\langle \mathcal{H}_6 \rangle$ = 0,59 pour le groupe candidat {#2, #3} ;

A partir des métriques de coopération relative à l'entropie, telles que les entropies moyennes $\langle \mathcal{H}_q \rangle$, obtenues à partir des matrices de taux de transition $M_q$ associées aux différents groupes candidats correspondant aux sous-matrices d'état, l'unité de détermination de regroupement 14 est configurée pour déterminer au moins un regroupement des dispositifs de détection 200 en déterminant quel groupe candidat 20 parmi les différents groupes candidats 20 considérés comporte des dispositifs de détection 200 ayant le plus de probabilité d'appartenir à un même réseau.

Dans l'exemple des matrices $M_1$ et $M_2$ correspondant à deux groupes candidats différents, l'unité de détermination de regroupement 14 est ainsi apte à utiliser les moyennes d'entropie calculées pour chaque matrice de taux de transition afin de déterminer s'il est plus probable que les dispositifs de détection 200 issus du groupe n°1 (ayant abouti à la

matrice $M_1$) appartiennent à un même réseau que ceux issus du groupe n°2 (ayant abouti à la matrice $M_2$).

Dans des modes de réalisation, les métriques de coopération obtenues pour les différents groupes candidats, telles que les entropies moyennes $\langle \mathcal{H}_q \rangle$, peuvent être comparées entre elles ou comparées à un seuil pour déterminer le regroupement de dispositifs de détection 200 qui minimise l'entropie moyenne et a donc la plus grande probabilité de coopération.

La métrique de coopération relative à l'entropie (par exemple entropie moyenne) fournit ainsi une vraisemblance de fonctionnement en réseau (ou de coopération de dispositifs de détection).

Selon un autre exemple, dans le cas des 4 groupes candidats considérés dans les figures 7, 8, 9 et 10, il est probable que les dispositifs de détection #1 et #3 du groupe candidat {#1, #3} ayant l'entropie la plus faible coopèrent tandis que le dispositif de détection #2 fonctionne seul.

Ainsi, pour chaque groupe candidat, il est déterminé la matrice de taux de transition, puis la métrique de coopération relative à l'entropie (par exemple l'entropie moyenne) à partir de la matrice de taux de transition déterminée pour le groupe candidat. Les métriques de coopération (entropies moyennes) peuvent être alors exploitées pour déterminer un ou plusieurs regroupements de dispositifs de détection.

Dans un mode de réalisation, pour chaque groupe candidat 20 considéré correspondant à une combinaison possible de dispositifs de détection coopérant 200, le dispositif de contrôle 1 peut déterminer un triplet de valeurs caractéristiques de groupe comprenant :

- La liste $L_q$ des dispositifs de détection 200 du groupe candidat 20 (désigné par $G_q$);

- la métrique de coopération relative à l'entropie telle que l'entropie moyenne $< H_q >$ déterminée pour ce groupe candidat à partir de sa matrice de taux de transition $M_q$ ;

- Le nombre $K_q$ de mesures utilisées pour calculer la matrice de taux de transition $M_q$ ($K_q$ représente le nombre de composantes, donc de lignes, dans la sous-matrice d'état utilisée pour déterminer la matrice de taux de transition).

Dans la suite de la description, il sera considéré que la métrique de coopération relative à l'entropie est l'entropie moyenne $< H_q >$ à titre d'exemple illustratif, et que le triplet de valeurs caractéristiques de groupe est donc noté $\{L_q, \langle \mathcal{H}_q \rangle, K_q\}$.

Les triplets $\{L_q, \langle \mathcal{H}_q \rangle, K_q\}$ obtenus pour les différents groupes candidats $G_q$ fournissent ainsi une information de tendance à travers la métrique de coopération relative à l'entropie $\langle \mathcal{H}_q \rangle$, sans donner directement l'estimation d'appartenance ou non à un même réseau coopératif de dispositifs de détection 200.

Dans un mode de réalisation, l'unité de détermination de regroupement 14 peut être configurée pour déterminer des regroupements de dispositifs de détection 200 en réseaux à partir de tous les triplets $\{L_q, \langle \mathcal{H}_q \rangle, K_q\}$ calculés pour les différents groupes candidats $G_q$, en utilisant une représentation des groupes candidats et de leurs triplets $\{L_q, \langle \mathcal{H}_q \rangle, K_q\}$ associés sous la forme d'un système mécanique dans un espace de représentation.

Pour générer une telle représentation en système mécanique, pour un ensemble 2 de n dispositifs de détection 200, l'espace de représentation est un espace de dimension n - 1 dans lequel sont appliquées des lois de mécanique du point. Dans cet espace de représentation, chaque dispositif de détection 200 réel est représenté sous la forme d'un point associé, qui est un point apte à être soumis à une ou plusieurs forces.

Chaque triplet $\{L_q, \langle \mathcal{H}_q \rangle, K_q\}$ est un indicateur du niveau de coopération de certains dispositifs de détection 200 entre eux (c'est-à-dire qu'il indique à quel point ils semblent coopérer). Si un triplet $\{L_q, \langle \mathcal{H}_q \rangle, K_q\}$ correspond à un groupe candidat faisant intervenir p dispositifs de détection 200 (i.e. p est le nombre de dispositifs de la liste $L_q$), le système mécanique utilisé pour représenter le groupe candidat $G_q$ et le triplet $\{L_q, \langle \mathcal{H}_q \rangle, K_q\}$ associé dans l'espace de représentation comprend en outre p liaisons élastiques reliant les p points représentatifs des dispositifs de détection 200 au centre d'une hypersphère circonscrite aux p points (hypersphère passant par les p points), dans l'espace de représentation. La longueur à vide, notée $l_q$, de ces liaisons élastiques est définie par l'entropie moyenne $\langle \mathcal{H}_q \rangle$ du triplet de valeurs et la constante de raideur élastique de ces liaisons élastiques, notée $k$, est proportionnelle au nombre de mesures $K_q$ donné par le triplet de valeurs.

Ainsi, les points représentatifs des dispositifs de détection 200 sont attirés si l'entropie $\langle \mathcal{H}_q \rangle$ est faible ou repoussés les uns des autres si l'entropie $\langle \mathcal{H}_q \rangle$ est forte avec une force qui dépend du nombre de mesures $K_q$, et donc de la fiabilité de cette entropie. Les liaisons élastiques entre les p points sont utilisées pour s'assurer que tous les points représentatifs des dispositifs de détection 200 soient à égale distance d'un même point central (i.e. le centre de l'hypersphère). L'espace d'évolution du système mécanique doit donc être de dimension $p - 1$, donc au plus $n - 1$ (dans le cas où $p = n$, c'est-à-dire dans le cas d'un triplet qui fait intervenir toutes les dispositifs de détection).

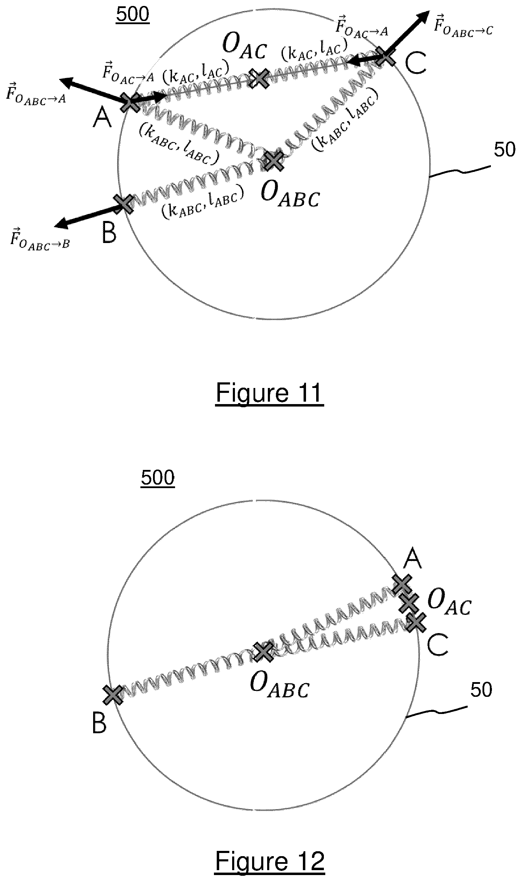

La figure 11 est un exemple de système mécanique 500 correspondant à une telle représentation, dans l'espace de représentation, du triplet $\{L_q, \langle \mathcal{H}_q \rangle, K_q\}$ obtenu pour un groupe candidat 20, dans lequel $n = 3$.

Dans cet exemple, 3 dispositifs de détection 200 ($n=3$) sont considérés, désignés par A, B et C. L'espace de représentation est donc un espace à 2 dimensions. Il est considéré un premier triplet qui correspond à un groupe candidat $G(A,B,C)$ comprenant les trois dispositifs de détection A, B et C. Des liaisons lient donc le point $O_{ABC}$, centre du cercle circonscrit au triangle ABC, aux point A, B et C. Il est considéré un deuxième triplet qui correspond à un groupe candidat $G(A, C)$ comprenant les deux dispositifs de détection A et C seulement. Des liaisons élastiques lient donc le milieu du segment [AC] aux points A et C.

Dans l'exemple de la figure 11, il est supposé que la longueur à vide $l_{ABC}$ pour le groupe $G(A,B,C)$ est grande tandis que la longueur $l_{AC}$ du groupe candidat $G(A, C)$ est petite. $k_{ABC}$ et $k_{AC}$ sont les constantes de raideurs des liaisons élastiques respectivement pour le groupe $G(A, B, C)$ et le groupe candidat $G(A, C)$.

Dans l'exemple de la figure 11, la force élastique issue du point $O_{ABC}$ qui s'exerce sur le point A (représentant un premier dispositif de détection) s'exprime sous la forme :

$$\vec{F}_{O_{ABC} \to A} = k_{ABC}(AO_{ABC} - l_{ABC}) \cdot \frac{\overrightarrow{AO_{ABC}}}{AO_{ABC}} \quad (5)$$

Si l'entropie $\langle \mathcal{H}_{ABC} \rangle$ du triplet $\{L_{ABC}, \langle \mathcal{H}_{ABC} \rangle, K_{ABC}\}$ associé au groupe $G_{ABC}$ comprenant les dispositifs A, B et C est forte mais que celle du triplet $\{L_{AC}, \langle \mathcal{H}_{AC} \rangle, K_{AC}\}$ associé au groupe $G_{AC}$ comprenant les dispositifs A et C est faible, alors après relaxation du système mécanique, le point $O_{ABC}$ doit être « loin » des points A, B et C tandis que le point $O_{AC}$ doit être proche des points A et C.

Le placement dans un espace de représentation à deux dimensions ($n = 3$) permet d'instaurer des liaisons vers le point $O_{ABC}$ de sorte que ces liaisons puisse atteindre leur longueur à vide, et permet également aux points A et C de se rapprocher l'un de l'autre sans impacter la tension des liaisons autour du point $O_{ABC}$. En effet, les points A et C peuvent se rapprocher en coulissant le long du cercle 50 représenté sur la figure 11.

Dans des modes de réalisation, des forces de frottement peuvent être appliquées au système mécanique 500. Dans ce cas, les forces de frottement ajoutées dans la représentation du système mécanique des groupes candidats pour permettre au système mécanique 500 de relaxer plutôt que d'avoir des oscillations perpétuelles, ce qui permet d'obtenir un système 500 où l'énergie potentielle élastique devient minimale. Dans certains cas, il peut en effet y avoir des tiraillements dans le sens où des ressorts peuvent entrer en contradiction. La constante de raideur $k_q$ de chaque ressort sert ainsi à arbitrer entre les forces des ressorts. Cependant, une fois que la relaxation est atteinte, les ressorts en contradiction (le ressort « perdant » comme le ressort « gagnant ») n'atteignent pas en pratique une énergie potentielle nulle mais minimale.

Les forces de frottement peuvent être de des forces de frottement de type amortissement élastique ou des forces de frottement de type frein en milieu fluide.

Dans le mode de réalisation où une force de frottement de type amortissement élastique est utilisée, la force d'amortissement élastique peut être exprimée sous la forme suivante, en considérant l'exemple d'une liaison entre un point I (représentant un dispositif de détection) d'un groupe candidat et le centre $O$ de l'hypersphère du système mécanique représentant le groupe candidat:

$$\vec{F}_{amortissement} = -f_{amortissement} \times \frac{\vec{v}_I . \overrightarrow{IO}}{IO} \quad (6)$$

Ainsi, dans l'exemple de la liaison entre un point $A$ et le centre $O_{ABC}$ de la figure 11, la force d'amortissement élastique peut s'exprimer de la manière suivante :

$$\vec{F}_{amortissement} = -f_{amortissement} \times \frac{\vec{v}_A . \overrightarrow{AO_{ABC}}}{AO_{ABC}}$$

Dans le mode de réalisation où une force de frottement de type frein en milieu fluidique est utilisée, la force de frottement fluide peut être exprimée sous la forme suivante en considérant l'exemple d'une liaison entre un point I (représentant un dispositif de détection) d'un groupe candidat et le centre $O$ de l'hypersphère du système mécanique représentant le groupe candidat :

$$\vec{F}_{fluide} = -f_{fluide} \times \vec{v}_I \quad (7)$$

Dans l'exemple de la liaison entre un point $A$ et le centre $O_{ABC}$ de la figure 11, la force d'amortissement élastique s'exprime ainsi de la manière suivante :

$$\vec{F}_{fluide} = -f_{fluide} \times \vec{v}_A$$

Dans les équations (6) et (7), les valeurs des coefficients de frottement $f_{amortissement}$ et $f_{fluide}$ sont prédéfinies pour permettre au système mécanique de se stabiliser et ne correspondent pas à une grandeur physique. Pour arriver à un état stable, l'unité de regroupement 14 peut faire évoluer le système mécanique représentant les groupes candidats dans l'espace de représentation en mettant en œuvre une résolution d'un système différentiel associé aux équations de mécanique du point qui régissent le système mécanique. Les coefficients de frottement $f_{amortissement}$ et de $f_{fluide}$ peuvent être ajustés au mieux. De petites valeurs des coefficients de frottement peuvent par exemple laisser le système mécanique 500 osciller longtemps avant de se stabiliser. Inversement, de grandes valeurs des coefficients de frottement peuvent freiner les oscillations du système mécanique 500 ainsi que la convergence vers l'état d'équilibre.

La simulation du système mécanique peut être effectuée, après avoir introduit une force de freinage pour éviter les oscillations pour permettre aux éléments de se déplacer et de les ralentir pour qu'ils se stabilisent jusqu'à l'état de relaxation.

Les équations différentielles du système mécanique ainsi obtenu peuvent être résolues par tout solveur adapté. Dans la simulation du système, l'énergie potentielle est convertie en énergie cinétique avec la mise en mouvement des éléments. L'énergie mécanique du système mécanique est égale à la somme de l'énergie potentielle et de l'énergie cinétique, qui est consommée par les forces de freinage. L'énergie mécanique diminue alors jusqu'à atteindre un état de stabilisation du système. Dans l'état de stabilisation du système mécanique, un algorithme de clusterisation peut être appliqué au système mécanique 500 pour déterminer au moins un regroupement de dispositifs de détection 200. L'algorithme de clusterisation utilise notamment la distance euclidienne entre les points représentatifs des dispositifs de détection dans l'état de stabilisation. L'algorithme de clusterisation appliqué peut être un algorithme de classification par densité comme par exemple un algorithme de type DBscan (pour 'Density-based Spatial Clustering of Applications with Noise' signifiant 'Regroupement spatial basé sur la densité d'applications avec bruit'). L'état de stabilisation est atteint une fois que les ressorts du système mécanique ont atteint leur minimum d'énergie potentielle.

La figure 12 est un schéma représentant le système mécanique 500 de la figure 12, après relaxation.

Comme illustré, l'ensemble de liaisons élastiques permet de rapprocher les points $A$ et $C$ si l'entropie $\langle \mathcal{H}_{AC} \rangle$ calculée pour le groupe $G_{AC}$ est faible tout en étant en adéquation avec l'entropie $\langle \mathcal{H}_{ABC} \rangle$, forte du groupe $G_{ABC}$ comprenant les points $A, B, C$.

Ainsi, l'unité de regroupement 14 est apte à générer une représentation des groupes candidats sélectionnés dans l'ensemble de détection 2 comprenant les n dispositifs de détection 200, sous la forme d'un système mécanique, dans un espace de représentation de dimension $n - 1$, à partir du triplet de valeurs déterminé pour chaque groupe candidat $\{L_q, \langle \mathcal{H}_q \rangle, K_q\}$ telle que :

- chaque dispositif de détection 200 d'un groupe candidat est représenté par un point dans l'espace de représentation;
- pour chaque groupe candidat comprenant une liste $L_q$ de p dispositifs de détection 200, le système mécanique utilisé pour représenter ce groupe candidat $G_q$ comprend p liaisons élastiques reliant les points représentatifs des dispositifs de détection 200 du groupe au centre d'une hypersphère circonscrite aux $p$ points, dans l'espace de représentation.
- La longueur à vide, notée $l$, des $p$ liaisons élastiques est définie par l'entropie moyenne $< H_q >$;

- la constante de raideur élastique $k$ des $p$ liaisons élastiques est proportionnelle au nombre de mesures $K_q$.
- des forces de frottement peuvent être appliquées au système mécanique 500 pour l'amener à un état de relaxation.

Dans un mode de réalisation, pour positionner l'hypersphère dans l'espace de représentation, l'unité de regroupement 14 peut calculer le centre de l'hypersphère circonscrite aux $p$ points dans l'espace de dimension $n - 1$ en utilisant des vecteurs $e_i$ tels que :

$$e_1 = \frac{u_1}{\|u_1\|} \quad (8)$$

Et :

$$\forall i \in [\![2; p-1]\!] e_i = \frac{u_i - \sum_{k=1}^{i-1}(u_i \cdot e_k)e_k}{\|u_i - \sum_{k=1}^{i-1}(u_i \cdot e_k)e_k\|} \quad (9)$$

Les vecteurs $e_i$ constituent $p - 1$ vecteurs de base.

Une matrice de projection R de taille $(p - 1) \times (n - 1)$ peut être ensuite utilisée telle que :

$$R = \begin{pmatrix} \vdots \\ e_i^T \\ \vdots \end{pmatrix}_{i \in [\![1; p-1]\!]} \quad (10)$$

La matrice R permet de projeter un élément de dimension n - 1 dans la base orthonormée qui a été créée (la base orthonormée est constituée des vecteurs $e_i$, la construction de la base ($e_1$, $e_2$, $e_3$, etc.) se faisant suivant le procédé d'orthonormalisation de Gramm-Schmidt). Il est à noter que l'indice i utilisé dans le cadre du calcul du centre de l'hypersphère est indépendant de l'indice i utilisé dans la description qui précède en relation avec les matrices de taux de transition (notamment comme indice de ligne).

Les coordonnées $Y_i$ des $p$ points dans le repère centré en $X_p$ et dont les vecteurs de base sont les $e_i$ sont alors définis selon la formule (11) suivante: [0238]

$$\forall i \in [\![1; p]\!], Y_i = R(X_i - X_p) \quad (11)$$

Par construction, $Y_p = 0$.

Dans cette base, le centre de l'hypersphère circonscrite peut alors être calculé.

Par définition, le centre de l'hypersphère, noté $\tilde{\Omega}$, vérifie l'équation suivante:

$$\|Y_i - \tilde{\Omega}\| = \|Y_j - \tilde{\Omega}\|, \forall i, j \in [\![1; p]\!] \quad (12)$$

Cette équation s'écrit encore :

$$(Y_i - \tilde{\Omega})^T(Y_i - \tilde{\Omega}) = (Y_j - \tilde{\Omega})^T(Y_j - \tilde{\Omega}) \quad (13)$$

$$Y_i^T Y_i + \tilde{\Omega}^T \tilde{\Omega} - \tilde{\Omega}^T Y_i - Y_i^T \tilde{\Omega} = Y_j^T Y_j + \tilde{\Omega}^T \tilde{\Omega} - \tilde{\Omega}^T Y_j - Y_j^T \tilde{\Omega} \quad (14)$$

$$Y_i^T Y_i - 2Y_i^T \tilde{\Omega} = Y_j^T Y_j - 2Y_j^T \tilde{\Omega} \quad (15)$$

$$Y_i^T Y_i - Y_j^T Y_j = 2(Y_i^T - Y_j^T)\tilde{\Omega} \quad (16)$$

Les $p$ - 1 équations suivantes (17) et (18) peuvent être alors résolues pour calculer le centre de l'hypersphère :

$$Y_i^T Y_i - Y_p^T Y_p = 2(Y_i^T - Y_p^T)\widetilde{\Omega}, \forall i \in [\![1; p - 1]\!] \quad (17)$$

$$Y_i^T Y_i = 2Y_i^T \widetilde{\Omega}, \forall i \in [\![1; p - 1]\!] \quad (18)$$

Par ailleurs, on considère le vecteur $B$ suivant de taille $p$ - 1 et la matrice $A$ de taille ($p$ - 1) $\times$ ($p$ - 1)) ::

$$B = \begin{pmatrix} \vdots \\ Y_i^T Y_i \\ \vdots \end{pmatrix}_{i \in [\![1;p-1]\!]} \quad (19)$$

$$A = \begin{pmatrix} \vdots \\ 2Y_i^T \\ \vdots \end{pmatrix}_{i \in [\![1;p-1]\!]} \quad (20)$$

Si les $Y_i$ sont tous différents, ce qui est en principe le cas si les points ne sont au départ pas confondus, alors la matrice $A$, créée à partir d'une famille de vecteurs libres, est inversible.
Le centre $\Omega$ peut alors être calculé à partir de l'équation (21) suivante :

$$\widetilde{\Omega} = A^{-1}B \quad (21)$$

$\tilde{\Omega}$ représente la position du centre de l'hypersphère dans un autre repère. En effet, au départ, les éléments sont positionnés suivant les vecteurs $X_i$. L'équation (11) a été ensuite utilisée pour redéfinir la position de chaque élément dans un repère orthonormé et centré autour du point d'indice p. L'équation (11) montre ainsi que le point p a comme position dans ce nouveau repère le point $\vec{0}$.
$\tilde{\Omega}$ peut alors s'exprimer dans le repère initial selon la formule (22):

$$\Omega = R^T \widetilde{\Omega} + X_p = R^T A^{-1}B + X_p \quad (22)$$

Le point $\Omega$ ainsi calculé représente le centre de l'hypersphère auquel sont attachées toutes les liaisons élastiques amenant à chacun des $p$ points.
A partir de la représentation des $n$ dispositifs de détection 200 de l'ensemble de détection 2 dans l'espace de représentation de dimension $n$ - 1, sous la forme d'un système mécanique 500, l'unité de regroupement 14 est apte à regrouper les dispositifs de détection 200 fonctionnant en réseaux ensemble, tout en éloignant ceux qui ne semblent *a priori* pas fonctionner ensemble, à partir de la représentation des liaisons élastiques entre les points d'un même groupe candidat.
L'unité de regroupement 14 peut être configurée pour appliquer ensuite l'algorithme de regroupement (ou « clusterisation ») au système mécanique obtenu après relaxation pour déterminer au moins un regroupement des dispositifs de détection 200 de l'espace de représentation, en utilisant les distances entre les points représent les dispositifs de détection, dans le système mécanique, tel que par exemple l'algorithme de type DB-Scan.
L'algorithme de clusterisation (tel que par exemple l'algorithme DB-Scan) est un procédé qui utilise un seuil définissant le voisinage $\varepsilon$ d'un point. Pour chaque point, le procédé détermine quels points sont dans le voisinage du point (c'est-à-dire à une distance inférieure à $\varepsilon$ du point considéré). Les points sélectionnés (points dans le voisinage) sont alors ajoutés pour former un regroupement. Le procédé effectue ainsi un regroupement de points représentant des dispositifs de détection 200 de proche en proche. Le seuil de voisinage $\varepsilon$ est prédéterminé ou prédéfini de manière adaptée en fonction de l'application de l'invention. En effet, si le seuil $\varepsilon$ est trop petit, chaque point peut former seul un regroupement dont il est l'unique membre. Si à l'inverse, le seuil $\varepsilon$ est trop grand, un seul regroupement englobant tous les points peut être déterminé.

L'unité de détermination de logique d'enchaînement d'état 16 peut déterminer la logique d'enchaînement d'états du regroupement déterminé à partir des matrices de taux de transition déterminées pour les différents groupes candidats par l'unité 12. La logique d'enchaînement d'états définit les règles de transition d'un état à l'autre pour chaque dispositif de détection du regroupement déterminé.

Pour déterminer la logique d'enchainement d'état d'un regroupement déterminé, l'unité de détermination de logique d'enchaînement d'état 16 peut sélectionner toutes les matrices de taux de transition qui ne sont associées qu'à des dispositifs de détection 200 appartenant au regroupement déterminé, et effectuer une moyenne pondérée par le nombre de points de mesures, ce qui fournit une matrice de taux de transition résultante qui représente la logique d'enchaînement au sein du regroupement.

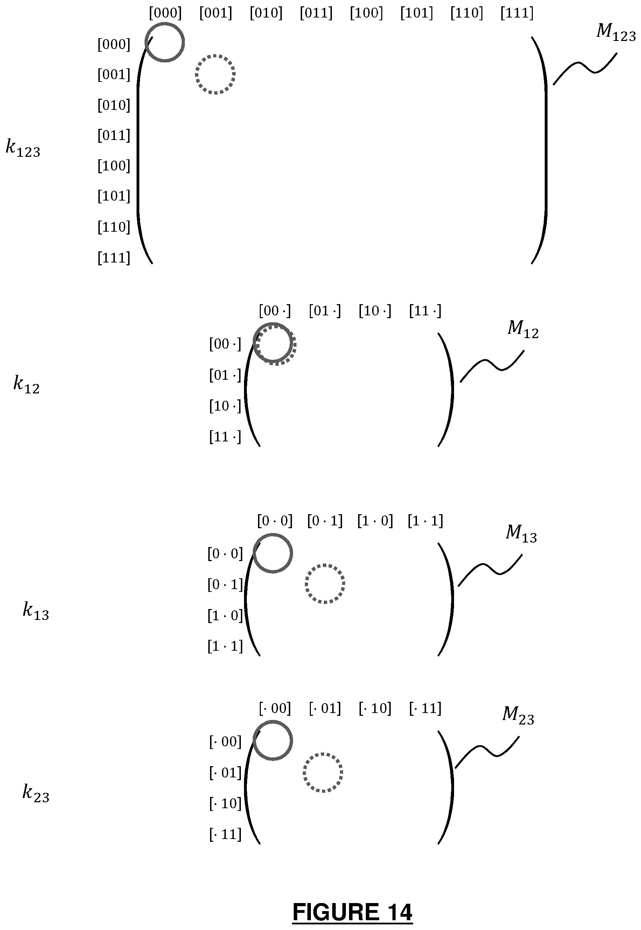

En particulier, pour chaque regroupement obtenu, l'unité de détermination de logique d'enchaînement d'état 16 sélectionne toutes les matrices de taux de transition obtenues correspondant à des groupes candidats comprenant un dispositif de détection 200 du regroupement considéré. Par exemple, si le regroupement considéré est un regroupement $\mathcal{R}_{123}$ comprenant trois dispositifs de détection #1, #2, et #3 tel que $\mathcal{R}_{123}$ =[#1 ,#2,#3], l'unité de détermination de logique d'enchaînement d'état 16 sélectionne les quatre matrices de taux de transition $M_{13}$, $M_{23}$ et $M_{123}$ associées respectivement aux quatre groupes candidats [#1,#2], [#1,#3], [#2,#3], [#1,#2,#3], comme illustré sur la figure 14. L'unité de détermination de logique d'enchaînement d'état 16 est ensuite apte à reconstruire une matrice de taux de transition résultante $M_{Res}$ à partir des matrices de taux de transition sélectionnées en prenant en compte les $L$ dispositifs de détection du regroupement considéré (par exemple trois dispositifs de détection dans l'exemple qui précède), de sorte que la taille de la matrice de taux de transition résultante $M_r$ est $2^L$ ($2^3$ = 8 dans l'exemple qui précède où le regroupement $\mathcal{R}_{123}$ comprend 3 dispositifs de détection). Pour déterminer la matrice de taux de transition résultante $M_{Res}$, il est considéré que chaque matrice de taux de transition $M_q$ déterminée par l'unité de détermination de matrice de taux de transition 14, a un poids $k$, qui correspond à la quantité d'information utilisée pour l'obtenir. Cette valeur de poids correspond (i.e. est égale) à la constante de raideur utilisée pour la relaxation mécanique du système mécanique 500.

Dans l'exemple de regroupement $\mathcal{R}_{123}$ , quatre poids $k_{12}$, $k_{13}$, $k_{23}$ et $k_{123}$ sont respectivement associés aux différentes matrices de taux de transition $M_{13}$, $M_{12}$, $M_{23}$ et $M_{123}$.

L'unité de détermination de logique d'enchaînement d'état 16 peut déterminer dans un premier temps les termes diagonaux de la matrice de taux de transition $M_{Res}$ à reconstruire à partir des matrices de taux de transition sélectionnées.

Chacun de ces termes diagonaux correspond à la vitesse à laquelle le système correspondant au regroupement $\mathcal{R}$ quitte chaque état. Pour déterminer un tel terme diagonal, comme illustré sur la figure 14, l'unité de détermination de logique d'enchaînement d'état 16 peut identifier tous les termes correspondant ou pouvant correspondre à la vitesse de départ depuis le premier état, soit l'état [000] dans l'exemple de la figure 14 (cercles en traits pleins). Les états correspondant aux lignes et colonnes identifient un éventuel dispositif de détection 200 non pris en compte par une matrice de taux de transition sélectionnée, parmi les dispositifs de détection du regroupement $\mathcal{R}$ . L'unité de détermination de logique d'enchaînement d'état 16 considère alors chacune des valeurs comme une mesure entachée d'une erreur gaussienne, dont la variance vaut :

$$\sigma^2 = \frac{1}{k} \times 2^r \quad (23)$$

Dans l'équation (23), $r$ désigne le nombre de dispositifs de détection 200 non pris en compte par une matrice de taux de transition sélectionnée, parmi les dispositifs de détection du regroupement $\mathcal{R}$ . Ainsi, dans l'exemple de la figure 14, il vient $\sigma^2_{123} = \frac{1}{k_{123}} \times 2^0$ (0 dispositif de détection non pris en compte par la matrice $M_{123}$ parmi les dispositifs de détection du regroupement #1, #2, et #3), $\sigma^2_{12} = \frac{1}{k_{12}} \times 2^1$ (1 dispositif de détection non pris en compte dans la matrice $M_{12}$, soit le dispositif de détection #3), $\sigma^2_{13} = \frac{1}{k_{13}} \times 2^1$ (1 dispositif de détection non pris en compte dans la matrice $M_{13}$, soit le dispositif de détection #2), $\sigma^2_{23} = \frac{1}{k_{23}} \times 2^1$ (1 dispositif de détection non pris en compte dans la matrice $M_{23}$, soit le dispositif de détection #1).

L'unité de détermination de logique d'enchaînement d'état 16 effectue ensuite un calcul de maximum de vraisemblance pour obtenir l'estimation du terme diagonal recherché, à savoir la vitesse de départ de l'état [000].

Un tel calcul revient à déterminer *x* tel que la vraisemblance $\mathcal{L}$ est maximale, où $\mathcal{L}$ est donnée par :

$$\mathcal{L} = e^{-\frac{\left(x-x^{(123)}_{[000],[000]}\right)^2}{2\sigma^2_{123}}} \times e^{-\frac{\left(x-x^{(12)}_{[00\cdot],[00\cdot]}\right)^2}{2\sigma^2_{12}}} \times e^{-\frac{\left(x-x^{(13)}_{[0\cdot0],[0\cdot0]}\right)^2}{2\sigma^2_{13}}} \times e^{-\frac{\left(x-x^{(23)}_{[\cdot00],[\cdot00]}\right)^2}{2\sigma^2_{23}}} \quad (24)$$

La maximisation de $\mathcal{L}$ telle que définie par équation (24) revient à minimiser la quantité :

$$\frac{\left(x-x^{(123)}_{[000],[000]}\right)^2}{\sigma^2_{123}} + \frac{\left(x-x^{(12)}_{[00\cdot],[00\cdot]}\right)^2}{\sigma^2_{12}} + \frac{\left(x-x^{(13)}_{[0\cdot0],[0\cdot0]}\right)^2}{\sigma^2_{13}} + \frac{\left(x-x^{(23)}_{[\cdot00],[\cdot00]}\right)^2}{\sigma^2_{23}} \quad (25)$$

La quantité définie par l'équation (25) est minimale lorsque :

$$\frac{x-x^{(123)}_{[000],[000]}}{\sigma^2_{123}} + \frac{x-x^{(12)}_{[00\cdot],[00\cdot]}}{\sigma^2_{12}} + \frac{x-x^{(13)}_{[0\cdot0],[0\cdot0]}}{\sigma^2_{13}} + \frac{x-x^{(23)}_{[\cdot00],[\cdot00]}}{\sigma^2_{23}} = 0 \quad (26)$$

L'équation (27) permet de déduire $x_{[000],[000]}$:

$$x_{[000],[000]} = \frac{\frac{x^{(123)}_{[000],[000]}}{\sigma^2_{123}} + \frac{x^{(12)}_{[00\cdot],[00\cdot]}}{\sigma^2_{12}} + \frac{x^{(13)}_{[0\cdot0],[0\cdot0]}}{\sigma^2_{13}} + \frac{x^{(23)}_{[\cdot00],[\cdot00]}}{\sigma^2_{23}}}{\frac{1}{\sigma^2_{123}} + \frac{1}{\sigma^2_{12}} + \frac{1}{\sigma^2_{13}} + \frac{1}{\sigma^2_{23}}} \quad (27)$$

L'unité de détermination de logique d'enchaînement d'état 16 répète ensuite les mêmes étapes pour estimer la vitesse de départ de l'état suivant, soit l'état [001] dans l'exemple de la figure 14 (deuxième itération) et déterminer le deuxième terme diagonal de la matrice de taux de transition résultante $M_{Res}$ à construire. Dans l'exemple de la figure 14, les termes entourés en pointillés sont ceux qui sont pris en compte dans la deuxième itération mis en œuvre par l'unité de détermination de logique d'enchaînement d'état 16 pour déterminer le deuxième terme diagonal de la matrice de taux de transition résultante $M_{Res}$ à construire.

L'unité de détermination de logique d'enchaînement d'état 16 répète ensuite les mêmes étapes pour estimer la vitesse de départ des états suivants, jusqu'à obtenir tous les termes de la diagonale de la matrice de taux de transition résultante $M_{Res}$.

Pour les termes non diagonaux, l'unité de détermination de logique d'enchaînement d'état 16 peut effectuer une normalisation des différentes matrices de taux de transition sélectionnées, par lignes, en divisant chaque ligne d'une matrice de taux de transition sélectionnée par la valeur absolue du terme diagonal de la ligne. La somme des termes non diagonaux de chaque matrice de taux de transition sélectionnée, après normalisation, vaut donc 1.

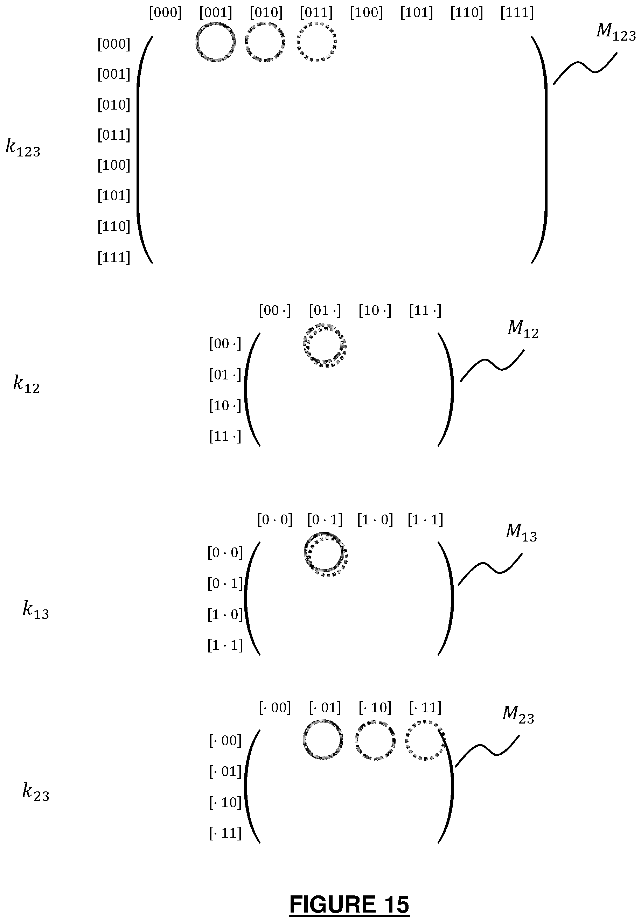

L'unité de détermination de logique d'enchaînement d'état 16 peut alors identifier les termes correspondant ou pouvant correspondre au changement d'état concerné dans les matrices de taux de transition sélectionnées, à l'exception des termes diagonaux comme illustré par la figure 15. Par exemple, pour le changement d'état [000]→[001], ces termes identifiés sont entourés en traits pleins, en tirets pour le changement d'état [000]→[010], et en pointillés pour le changement d'état [000]→[011]. Il est à noter que toutes les matrices de taux de transition sélectionnées n'interviennent pas nécessairement car l'élément pouvant correspondre au changement d'état voulu est parfois diagonal, donc reste ignoré.

L'unité de détermination de logique d'enchaînement d'état 16 peut utiliser la formule (24) pour calculer une estimation du terme recherché de la matrice de taux de transition résultante $M_{Res}$ (tels que les termes $\tilde{x}_{[000],[001]}$, $\tilde{x}_{[000],[010]}$, $\tilde{x}_{[000],[011]}$, etc.. ), comme par exemple:

-

$$\tilde{x}_{[000],[001]} = \frac{\frac{x^{(123)}_{[000],[001]}}{\sigma^2_{123}} + \frac{x^{(13)}_{[0\cdot0],[0\cdot1]}}{\sigma^2_{13}} + \frac{x^{(23)}_{[\cdot00],[\cdot01]}}{\sigma^2_{23}}}{\frac{1}{\sigma^2_{123}} + \frac{1}{\sigma^2_{13}} + \frac{1}{\sigma^2_{23}}},$$

-

$$\tilde{x}_{[000],[010]} = \frac{\frac{x^{(123)}_{[000],[010]}}{\sigma^2_{123}} + \frac{x^{(12)}_{[00\cdot],[01\cdot]}}{\sigma^2_{12}} + \frac{x^{(23)}_{[\cdot00],[\cdot10]}}{\sigma^2_{23}}}{\frac{1}{\sigma^2_{123}} + \frac{1}{\sigma^2_{12}} + \frac{1}{\sigma^2_{23}}},$$

-

$$\tilde{x}_{[000],[011]} = \frac{\frac{x^{(123)}_{[000],[011]}}{\sigma^2_{123}} + \frac{x^{(12)}_{[00\cdot],[01\cdot]}}{\sigma^2_{12}} + \frac{x^{(13)}_{[0\cdot0],[0\cdot1]}}{\sigma^2_{13}} + \frac{x^{(23)}_{[\cdot00],[\cdot11]}}{\sigma^2_{23}}}{\frac{1}{\sigma^2_{123}} + \frac{1}{\sigma^2_{12}} + \frac{1}{\sigma^2_{13}} + \frac{1}{\sigma^2_{23}}}, \text{ etc.}$$

Comme les matrices de taux de transition sélectionnées ont été préalablement normalisées, les termes non diagonaux de la matrice de taux de transition résultante $M_{Res}$ sont obtenus en effectuant ensuite les calculs suivants:

-

$$x_{[000],[001]} = \tilde{x}_{[000],[001]} \times \left| x_{[000],[000]} \right|,$$

-

$$x_{[000],[010]} = \tilde{x}_{[000],[010]} \times \left| x_{[000],[000]} \right|,$$

-

$$x_{[000],[011]} = \tilde{x}_{[000],[011]} \times \left| x_{[000],[000]} \right|,$$

etc.

Dans l'exemple de la figure 12, le système mécanique 500 généré permet de déterminer que les dispositifs de détection 200 A et C font partie du même regroupement, tandis que l'entité B est isolée, du fait de leurs distances respective, après relaxation. Dans cet exemple, pour déterminer la logique d'enchaînement des regroupements ainsi obtenus, l'unité de regroupement 14 peut recalculer les matrices de taux de transitions résultantes correspondant à ces regroupements, en calculant une matrice de taux de transition $M_{AC}$ pour le regroupement {A,C} et une matrice de taux de transition $M_B$ pour le regroupement {B} respectivement à partir des données observées pour les dispositifs de détection A et C d'une part et pour le dispositif de détection B d'autre part. Dans cet exemple, la matrice de taux de transition $M_{AC}$ est au plus de taille 4x4 (car on a au plus $2^2 = 4$ états possibles) tandis que la matrice de taux de transition $M_B$ est au plus de taille 2x2 (car on a au plus $2^1 = 1$ états possibles). Ces matrices de taux de transition sont en principe creuses, c'est-à-dire qu'elles contiennent peu d'éléments non nuls, ce qui permet de les exploiter.

Les modes de réalisation de l'invention permettent ainsi de déterminer des regroupements de dispositifs de détection 200 en réseaux de coopération optimaux, à partir de données d'état initiales simples (éléments booléens sans la complexité de l'intégralité de l'information recueillie lors de l'interception d'un signal électromagnétique/acoustique émanant d'un des dispositifs de détection présents).

Avantageusement, le dispositif de contrôle 1 est apte à transposer le problème du regroupement des dispositifs de détection 200 dans le domaine de la mécanique du point, en représentant les groupes candidats de l'ensemble de détection 2 sous la forme d'un système mécanique où les dispositifs sont représentés par des points reliés par des liaisons élastiques. Cette représentation permet d'utiliser l'algorithme de 'clustering' pour déterminer les regroupements de dispositifs de détection 200 qui fonctionnent en coopération. A partir des regroupements obtenus, les matrices de taux de transitions déjà calculées permettent de déterminer la logique d'orchestration de chaque regroupement.

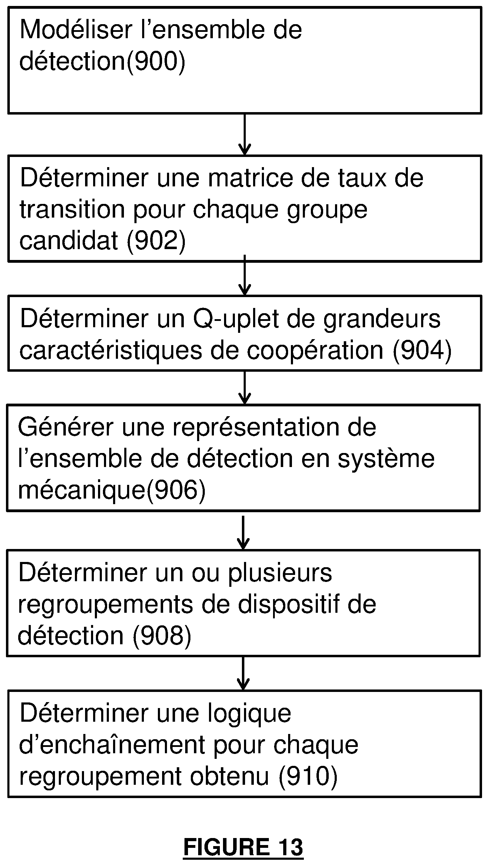

La figure 13 est un organigramme illustrant un procédé de détection coopératif pour surveiller une zone de surveillance utilisant l'ensemble de détection 2, selon certains modes de réalisation.

A l'étape 900, une modélisation des dispositifs de détection 200 de l'ensemble de détection 2 est reçue. Cette modélisation fournit une modélisation de l'ensemble de détection 2 sous la forme d'un macro-système passant d'un état à un autre dès qu'un dispositif de détection 200 commute de l'état actif ('ON') vers l'état inactif ('OFF') ou inversement.

A l'étape 902, les matrices de taux de transition sont déterminées en effectuant une phase d'apprentissage à partir des jeux de données d'état observées 3, à partir de la modélisation des dispositifs de détection 200.

L'étape 902 utilise avantageusement un apprentissage à base de chaînes de Markov cachées (HMM) pour déterminer des matrices de taux de transition.

A l'étape 904, des groupes candidats sont déterminés correspondant à différentes combinaisons de dispositifs de détection 200 de l'ensemble 2.

A l'étape 906, un Q-uplet de valeurs caractéristiques de groupe est déterminé pour chaque groupe candidat à partir des matrices de taux de transition, l'ensemble de valeurs caractéristiques comprenant au moins la métrique de coopération relative à l'entropie, estimée pour le groupe candidat (entropie statistique au sens de la théorie de l'information). L'ensemble de valeurs caractéristiques de groupe candidat peut être notamment le triplet $\{L_q, \langle \mathcal{H}_q \rangle, K_q\}$.

A l'étape 907, une représentation des n dispositifs de l'ensemble de détection 2 est générée dans l'espace de représentation de dimension n - 1 sous la forme du système mécanique 500 en utilisant l'ensemble de valeurs caractéristiques déterminées pour les groupes candidats.

A l'étape 908, un ou plusieurs regroupements de dispositifs de détection 200 fonctionnant en réseau (coopérant) sont déterminés en appliquant un algorithme de clusterisation au système mécanique 500, après relaxation.

A l'étape 910, la logique d'enchaînement d'états de chaque regroupement obtenu à l'étape 908 est déterminée en générant une matrice de taux de transition résultante à partir des matrices de taux de transitions déterminées à l'étape 902.

Les regroupements de dispositifs de détection 200 peuvent alors être utilisés selon les logiques d'enchainement d'état déterminées à l'étape 910 pour réaliser une mission de détection ou de surveillance commune dans la zone de surveillance.

Le dispositif de contrôle 1 peut initier la détermination d'un regroupement dans différentes phases d'une mission de détection, comme par exemple en retour de mission, une fois au sol, en analyse, ou bien directement en vol pour des dispositifs de détection 200 de type radar. La détermination d'un regroupement peut notamment être réalisée en temps réel. Dans ce cas, les données réelles 3 relatives à l'état des dispositifs de détections issues des observations peuvent être collectées dynamiquement et la puissance de calcul est adaptée pour obtenir un résultat rapide.

L'homme du métier comprendra que le système ou des sous-système selon les modes de réalisation de l'invention peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier.

**Revendications**

1. Système de détection coopératif (100) comprenant un ensemble de détection (2) pour surveiller une zone de surveillance, l'ensemble de détection comprenant une pluralité de dispositifs de détection (200), **caractérisé en ce qu'**il comprend :

   - une unité de détermination de matrice de taux de transition (12) configurée pour estimer une matrice de taux de transition, pour chaque groupe candidat parmi un ou plusieurs groupes candidats de dispositifs de détection de l'ensemble (2), en effectuant une phase d'apprentissage à base de chaînes de Markov cachées (HMM), à partir d'un jeu de données initiales indiquant des états d'activité des dispositifs de détection (200) de l'ensemble de détection (2) préalablement détectés et d'une modélisation de l'ensemble de détection (2), la matrice de taux de transition d'un groupe candidat comprenant des coefficients, chacun représentant une vitesse de transition d'un état d'activité à l'autre pour chaque dispositif de détection (200) du groupe candidat associé,

- une unité de détermination de grandeurs caractéristiques de groupe (13) configurée pour déterminer un ensemble de grandeurs caractéristiques pour chaque groupe candidat à partir de la matrice de taux de transition obtenue pour le groupe candidat, l'ensemble de grandeurs caractéristiques de groupe comprenant au moins une métrique de coopération relative à une entropie déterminée pour le groupe candidat ;
- une unité de détermination de regroupement (14) configurée pour déterminer au moins un regroupement (20) de dispositifs de détection (200) à partir de l'ensemble de grandeurs caractéristiques de groupe déterminé pour chaque groupe candidat, un regroupement de détection comprenant au moins deux dispositifs de détection (200) connectés en réseau et aptes à coopérer entre eux;

le système de détection coopératif étant apte à utiliser un regroupement déterminé pour la surveillance de la zone de surveillance.

2. Système de détection selon la revendication 1, dans lequel un coefficient de la matrice de taux de transition a un premier indice correspond à un état de départ et un deuxième indice correspondant à un état d'arrivée, la matrice de taux de transition étant une matrice carrée, la dimension de la matrice de taux de transition associée à un groupe candidat de taille R étant définie par le nombre total $L^R$ d'états d'activité possibles pour tous les R dispositifs de détection du groupe candidat, chaque dispositif de détection ayant un nombre L d'états d'activité.

3. Système de détection coopératif selon l'une des revendications précédentes, comprenant en outre une unité de détermination de règles d'enchaînement d'états (16) configurée pour déterminer des règles d'enchaînement d'états pour chaque regroupement déterminé (20), à partir des matrices de taux de transition déterminées par l'unité de détermination de matrice de taux de transition (12) pour les groupes candidats comprenant au moins un dispositif de détection du regroupement et d'un poids associées auxdites matrices de taux de transition, les règles d'enchaînement d'états déterminées pour un regroupement définissant les transitions d'états d'activité des dispositifs de détection du regroupement, le système de détection coopératif (100) étant apte à contrôler chaque regroupement (20) déterminé pour la surveillance de la zone de surveillance, selon les règles d'enchaînement d'états déterminées pour le regroupement.

4. Système de détection coopératif selon l'une des revendications précédentes, dans lequel la zone de surveillance est située autour des dispositifs de détection de l'ensemble de détection (2).

5. Système de détection coopératif selon l'une des revendications 2 à 4, dans lequel l'unité de détermination de valeurs caractéristiques de groupe (13) est configurée pour déterminer une matrice de probabilités à partir de la matrice de taux de transition associé à un groupe candidat, en normalisant les termes non diagonaux de chaque ligne de la matrice de taux de transition de sorte que leur somme soit unitaire, ce qui fournit un vecteur de probabilités $V_i$ pour chaque ligne i de la matrice de taux de transition, comprenant des valeurs de probabilités, chacune en correspondance avec un des termes de la ligne i de la matrice de taux de transition, à l'exception du terme diagonal, lesdites valeurs de probabilité $p_{ik}$ du vecteur de probabilités $V_i$ obtenu pour une ligne i représentant les probabilités de transitions vers un état d'arrivée, lesdits vecteurs de probabilités $V_i$ obtenus pour toutes les lignes de la matrice de taux de transition formant les lignes de ladite matrice de probabilités $\mathcal{P}$, la métrique de coopération relative à une entropie du groupe candidat étant calculée à partir de la matrice de probabilité.

6. Système de détection coopératif selon la revendication 5, dans lequel le calcul de la métrique de coopération relative à une entropie du groupe candidat comprend, pour chaque ligne i de la matrice de probabilités P, la détermination d'une valeur d'entropie, les valeurs d'entropie déterminées pour les différentes lignes de la matrice de probabilités formant un vecteur d'entropie $\mathcal{H}$ comprenant des valeurs d'entropie $h_i$ associée à chaque ligne i de la matrice de probabilités P, la métrique de coopération relative à une entropie du groupe candidat étant déterminée à partir du vecteur d'entropie $\mathcal{H}$.

7. Système de détection coopératif selon la revendication 6, dans lequel la valeur d'entropie $h_i$ associée à une ligne i de la matrice de probabilités P est une entropie de Shanon, déterminée selon l'équation (1) suivante :

$$h_i = -\sum_{k=1}^{N-1} p_{ik} \ln p_{ik} \ (1)$$

8. Système de détection coopératif selon la revendication 7, dans lequel la métrique de coopération est une moyenne d'entropie calculée en effectuant une moyenne des composantes du vecteur d'entropie $\mathcal{H}$, pondérée en appliquant un coefficient de pondération $\alpha_j$ à chaque composante $h_j$ du vecteur d'entropie $\mathcal{H}$.

9. Système de détection coopératif selon la revendication 8, dans lequel les coefficients de pondération $\alpha_j$ constituent les composantes d'un vecteur $\eta$ d'état stationnaire moyen défini par :

$$\eta = \frac{1}{n}\exp(\tau.M^T)\begin{pmatrix}1\\\vdots\\1\end{pmatrix},$$

où n désigne la dimension de la matrice de taux de transition M et $\tau$ est un paramètre représentant une valeur de temps.

10. Système de détection coopératif selon la revendication 9, dans lequel le paramètre de temps $\tau$ est égal à $\tau = 10^3 \times \max(\lambda_i)$, $\lambda_i$ désignant les valeurs propres de la matrice de taux de transition.

11. Système de détection coopératif selon l'une des revendications précédentes 8 à 10, dans lequel l'ensemble de valeurs caractéristiques de groupe est triplet de valeur comprenant la liste $L_q$ des dispositifs de détection (200) du groupe candidat $G_q$, l'entropie moyenne $< H_q >$, et le nombre de mesures $K_q$ utilisées pour calculer la matrice de taux de transition.

12. Système de détection coopératif selon la revendication 11, dans lequel l'unité de détermination de regroupement (14) est apte à générer une représentation des groupes candidats sélectionnés dans l'ensemble de détection (2) comprenant n dispositifs de détection (200), sous la forme d'un système mécanique, dans l'espace de représentation de dimension n - 1, à partir du triplet de valeurs déterminé pour chaque groupe candidat $\{L_q, \langle\mathcal{H}_q\rangle, K_q\}$, et dans lequel :

   - chaque dispositif de détection (200) d'un groupe candidat est représenté par un point dans l'espace de représentation,
   - pour chaque groupe candidat comprenant une liste $L_q$ de p dispositifs de détection 200, le système mécanique comprend p liaisons élastiques reliant les points représentatifs des dispositifs de détection (200) du groupe candidat au centre d'une hypersphère (50) circonscrite aux p points, dans l'espace de représentation ;
   - La longueur à vide l desdites p liaisons élastiques est définie par l'entropie moyenne $\langle\mathcal{H}_q\rangle$,
   - la constante de raideur élastique k des p liaisons élastiques est proportionnelle au nombre $K_q$.

13. Système de détection coopératif selon la revendication 12, dans lequel le système mécanique comprend en outre des forces de frottement de type amortissement élastique ou des forces de frottement de type frein en milieu fluide relatives à des coefficients de frottement choisis pour amener le système mécanique dans un état stable.

14. Système de détection coopératif selon une des revendications 12 et 13, dans lequel l'unité de regroupement (14) est apte à faire évoluer le système mécanique vers un état stable en mettant en œuvre une résolution d'un système différentiel associé aux équations qui régissent le système mécanique.

15. Système de détection coopératif selon une des revendications 12 à 14, dans lequel l'unité de regroupement (14) est apte à déterminer au moins un regroupement de dispositifs de détection en appliquant un algorithme de regroupement au système mécanique utilisant la distance entre les points représentatifs des dispositifs de détection dans le système mécanique (500), dans l'état stable.

16. Procédé de détection coopératif (100) pour surveiller une zone de surveillance en utilisant un ensemble de détection (2) comprenant une pluralité de dispositifs de détection (200), **caractérisé en ce qu'**il comprend les étapes consistant à :

   - définir un ou plusieurs groupes candidats de dispositifs de détection (200) de l'ensemble de détection (2),
   - déterminer une matrice de taux de transition (12) pour chaque groupe candidat en effectuant une phase d'apprentissage à base de chaînes de Markov cachées (HMM), à partir d'un jeu de données initial indiquant des états d'activité des dispositifs de détection de l'ensemble de détection (2) préalablement détectés et d'une modélisation de l'ensemble de détection (2), la matrice de taux de transition d'un groupe candidat comprenant des coefficients, chaque coefficient représentant une vitesse de transition d'un état à l'autre pour chaque dispositif de détection (200) du groupe candidat associé,

- déterminer un ensemble de grandeurs caractéristiques de groupe (13) pour chaque groupe candidat à partir de la matrice de taux de transition obtenue pour le groupe candidat, l'ensemble de grandeurs caractéristiques de groupe comprenant au moins une métrique de coopération relative à une entropie calculée pour le groupe candidat;

- déterminer au moins un regroupement (20) de dispositifs de détection (200) à partir de l'ensemble de grandeurs caractéristiques de groupe déterminé pour chaque groupe candidat, un regroupement de détection comprenant au moins deux dispositifs de détection (200) connectés en réseau et aptes à coopérer entre eux; le procédé de détection coopératif étant apte à utiliser chaque regroupement déterminé pour la surveillance de la zone de surveillance.

## Patentansprüche

1. Kooperatives Erkennungssystem (100), das eine Erkennungsanordnung (2) zum Überwachen einer Überwachungszone umfasst, wobei die Erkennungsanordnung eine Vielzahl von Erkennungsvorrichtungen (200) umfasst, **dadurch gekennzeichnet, dass** es umfasst: - eine Bestimmungseinheit einer Übergangsratenmatrix (12), die konfiguriert ist, um eine Übergangsratenmatrix für jede Kandidatengruppe aus einer oder mehreren Kandidatengruppen für Erkennungsvorrichtungen der Anordnung (2) durch Durchführen einer Lernphase basierend auf verborgenen Markov-Ketten (HMM) aus einem Satz aus Anfangsdaten zu schätzen, welche Aktivitätszustände der zuvor erfassten Erkennungsvorrichtungen (200) der Erkennungsanordnung (2) und einer Modellierung der Erkennungsanordnung (2) angeben, wobei die Übergangsratenmatrix einer Kandidatengruppe Koeffizienten umfasst, von denen jeder eine Übergangsgeschwindigkeit von einem Aktivitätszustand in den anderen für jedeErkennungsvorrichtung (200) der zugeordneten Kandidatengruppe darstellt,

- eine Bestimmungseinheit für charakteristische Gruppengrößen (13), die konfiguriert ist, um eine Anordnung charakteristischer Größen für jede Kandidatengruppe aus der Übergangsratenmatrix zu bestimmen, die für die Kandidatengruppe erhalten wird, wobei die Anordnung charakteristischer Gruppengrößen mindestens eine relative Kooperationsmetrik für eine für die Kandidatengruppe bestimmte Entropie umfasst;

- eine Bestimmungseinheit zur Zusammenlegung (14), die konfiguriert ist, um mindestens eine Zusammenlegung (20) von Erkennungsvorrichtungen (200) aus der Anordnung charakteristischer Gruppengrößen zu bestimmen, die für jede Kandidatengruppe bestimmt wird, wobei eine Erkennungszusammenlegung mindestens zwei Erkennungsvorrichtungen (200) umfasst, die in einem Netzwerk verbunden sind und imstande sind, miteinander zusammenzuwirken;

wobei das kooperative Erkennungssystem imstande ist, eine bestimmte Zusammenlegung zur Überwachung der Überwachungszone zu verwenden.

2. Erkennungssystem nach Anspruch 1, wobei ein Koeffizient der Übergangsratenmatrix einen ersten Index aufweist, der einem Startzustand entspricht, und einen zweiten Index, der einer Ankunft entspricht, wobei die Übergangsratenmatrix eine quadratische Matrix ist, die Dimension der einer Kandidatengruppe der Größe R zugeordneten Übergangsratenmatrix durch die Gesamtanzahl $L^R$ an möglichen Aktivitätszuständen für alle R Erkennungsvorrichtungen der Kandidatengruppe definiert wird, wobei jede Erkennungsvorrichtung eine Anzahl L an Aktivitätszuständen aufweist.

3. Kooperatives Erkennungssystem nach einem der vorstehenden Ansprüche, das weiter eine Bestimmungseinheit für Regeln einer Aufeinanderfolge von Zuständen (16) umfasst, die konfiguriert ist, um Regeln einer Aufeinanderfolge von Zuständen für jede bestimmte Zusammenlegung (20) aus Übergangsratenmatrizes zu bestimmen, die je Bestimmungseinheit einer Übergangsratenmatrix (12) für die Kandidatengruppen bestimmt werden, die mindestens eine Erkennungsvorrichtung der Zusammenlegung und einer Gewichtung umfassen, die den Übergangsratenmatrizes zugeordnet sind, wobei die für eine Zusammenlegung bestimmten Regeln einer Aufeinanderfolge von Zuständen die Aktivitätszustandsübergänge der Erkennungsvorrichtungen der Zusammenlegung definieren, wobei das kooperative Erkennungssystem (100) imstande ist, jede für die Überwachung der Überwachungszone bestimmte Zusammenlegung (20) gemäß den für die Zusammenlegung bestimmten Regeln einer Aufeinanderfolge von Zuständen zu kontrollieren.

4. Kooperatives Erkennungssystem nach einem der vorstehenden Ansprüche, wobei sich die Überwachungszone um die Erkennungsvorrichtungen der Erkennungsanordnung (2) herum befindet.

5. Kooperatives Erkennungssystem nach einem der Ansprüche 2 bis 4, wobei die Bestimmungseinheit für charakteristische Gruppenwerte (13) konfiguriert ist, um eine Matrix an Wahrscheinlichkeiten aus der einer Kandidatengruppe zugeordneten Überganngsratenmatrix durch Normalisieren von nicht diagonalen Termini einer jeden Zeile der Übergangsratenmatrix zu bestimmen, sodass ihre Summe einheitlich ist, wodurch ein Vektor an Wahrscheinlichkeiten $V_i$ für jede Zeile i der Übergangsratenmatrix bereitgestellt wird, der Werte für Wahrscheinlichkeiten jeweils in Übereinstimmung mit einem der Termini der Zeile i der Übergangsratenmatrix, mit Ausnahme des diagonalen Terminus, umfasst, wobei die Wahrscheinlichkeitswerte $p_{ik}$ des Vektors an Wahrscheinlichkeiten $V_i$, der für eine Zeile i erhalten wird, die Übergangswahrscheinlichkeiten in einen Ankunftszustand darstellen, wobei die Vektoren an Wahrscheinlichkeiten $V_i$, die für alle Zeilen der Übergangsratenmatrix erhalten werden, die Zeilen der Matrix an Wahrscheinlichkeiten P bilden, wobei die relative Kooperationsmetrik für eine Entropie der Kandidatengruppe aus der Wahrscheinlichkeitsmatrix berechnet wird.

6. Kooperatives Erkennungssystem nach Anspruch 5, wobei die Berechnung der relativen Kooperation für eine Entropie der Kandidatengruppe für jede Zeile i der Matrix an Wahrscheinlichkeiten P die Bestimmung eines Entropiewertes umfasst, wobei die für die verschiedenen Zeilen der Matrix an Wahrscheinlichkeiten bestimmten Entropiewerte einen Entropievektor H bilden, der Entropiewerte $h_i$ umfasst, die jeder Zeile i der Matrix an Wahrscheinlichkeiten P zugeordnet sind, wobei die relative Kooperation für eine Entropie der Kandidatengruppe aus dem Entropievektor H bestimmt wird.

7. Kooperatives Erkennungssystem nach Anspruch 6, wobei der Entropiewert $h_i$, der einer Zeile i der Matrix an Wahrscheinlichkeiten P zugeordnet ist, eine Shanon-Entropie ist, die gemäß der folgenden Gleichung (1) bestimmt wird:

$$h_i = -\sum_{k=1}^{N-1} p_{ik} \ln p_{ik} \ (1)$$

8. Kooperatives Erkennungssystem nach Anspruch 7, wobei die Kooperationsmetrik ein Entropiemittelwert ist, der durch Durchführen eines Mittelwerts aus den Bestandteilen des Entropievektors H berechnet wird, der durch Anwenden eines Gewichtungskoeffizienten $\alpha_j$ auf jeden Bestandteil $h_j$ des Entropievektors H gewichtet wird.

9. Kooperatives Erkennungssystem nach Anspruch 8, wobei die Gewichtungskoeffizienten $\alpha_j$ Bestandteile eines Vektors $\eta$ für einen mittleren stationären Zustand darstellen, der definiert ist durch:

$$\eta = \frac{1}{n} \exp(\tau . M^T) \begin{pmatrix} 1 \\ \vdots \\ 1 \end{pmatrix},$$

wobei n die Dimension der Übergangsratenmatrix M darstellt und $\tau$ ein Parameter ist, der einen Zeitwert darstellt.

10. Kooperatives Erkennungssystem nach Anspruch 9, wobei der Zeitparameter $\tau$ gleich $\tau = 10^3 \times \max(\lambda_i)$ ist, wobei $\lambda_i$ die Eigenwerte der Übergangsratenmatrix bezeichnet.

11. Kooperatives Erkennungssystem nach einem der vorstehenden Ansprüche 8 bis 10, wobei die Anordnung charakteristischer Gruppenwerte ein Werte-Tripel ist, das die Liste $L_q$ der Erkennungsvorrichtungen (200) der Kandidatengruppe $G_q$ umfasst, wobei die mittlere Entropie < $H_q$ >, und die Anzahl an Messungen $K_q$, die zum Berechnen der Übergangsratenmatrix verwendet werden sind.

12. Kooperatives Erkennungssystem nach Anspruch 11, wobei die Bestimmungseinheit zur Zusammenlegung (14) imstande ist, eine Darstellung der ausgewählten Kandidatengruppen in der Erkennungsanordnung (2), die n Erkennungsvorrichtungen (200) umfasst, in Form eines mechanischen Systems im Darstellungsraum der Dimension n - 1 aus dem Werte-Tripel zu generieren, das für jede Kandidatengruppe {$L_q$, (⟨$H_q$⟩), $K_q$} bestimmt wird, und wobei:

- wobei jede Erkennungsvorrichtung (200) einer Kandidatengruppe durch einen Punkt im Darstellungsraum dargestellt ist,
- das mechanische System für jede Kandidatengruppe, die eine Liste $L_q$ mit p Erkennungsvorrichtungen 200 umfasst, p elastische Verbindungen umfasst, welche die repräsentativen Punkte der Erkennungsvorrichtungen (200) der Kandidatengruppe im Zentrum einer Hyperkugel (50), die an den p eingegrenzt ist, im Darstellungsraum verbinden;
- wobei die Leerlauflänge I der p elastischen Verbindungen durch die mittlere Entropie $\langle H_q \rangle$ definiert ist;
- die elastische Steifigkeitskonstante k der p elastischen Verbindungen proportional zur Zahl $K_q$ ist.

13. Kooperatives Erkennungssystem nach Anspruch 12, wobei das mechanische System weiter Reibungskräfte vom Typ einer elastischen Dämpfung oder Reibungskräfte vom Typ Bremse in flüssigen Medien in Bezug auf Reibungskoeffizienten umfasst, die ausgewählt sind, um das mechanische System in einen stabilen Zustand zu bringen.

14. Kooperatives Erkennungssystem nach einem der Ansprüche 12 und 13, wobei die Zusammenlegungseinheit (14) imstande ist, das mechanische System durch Umsetzen einer Lösung eines Differentialsystems in einen stabilen Zustand weiter zu entwickeln, das den Gleichungen zugeordnet ist, die das mechanische System regeln.

15. Kooperatives Erkennungssystem nach einem der Ansprüche 12 bis 14, wobei die Zusammenlegungseinheit (14) imstande ist, mindestens eine Zusammenlegung von Erkennungsvorrichtungen durch Anwenden eines Zusammenlegungsalgorithmus auf das mechanische System unter Verwendung der Distanz zwischen den repräsentativen Punkten der Erkennungsvorrichtungen im mechanischen System (500) im stabilen Zustand zu bestimmen.

16. Kooperatives Erkennungsverfahren (100) zur Überwachung einer Überwachungszone unter Verwendung der Erkennungsanordnung (2), die eine Vielzahl von Erkennungsvorrichtungen (200) umfasst, **dadurch gekennzeichnet, dass** es die Schritte umfasst, bestehend aus:

    - Definieren einer oder mehrerer Erkennungsvorrichtungen (200) der Erkennungsanordnung (2),
    - Bestimmen einer Übergangsratenmatrix (12) für jede Kandidatengruppe durch Durchführen einer Lernphase basierend auf verborgenen Markov-Ketten (HMM) aus einem Satz aus Anfangsdaten, welche Aktivitätszustände der zuvor erfassten Erkennungsvorrichtungen der Erkennungsanordnung (2) und einer Modellierung der Erkennungsanordnung (2) angeben, wobei die Übergangsratenmatrix einer Kandidatengruppe Koeffizienten umfasst, wobei jeder Koeffizient eine Übergangsgeschwindigkeit von einem Zustand in den anderen für jede Erkennungsvorrichtung (200) der zugeordneten Kandidatengruppe darstellt,
    - Bestimmen einer Anordnung charakteristischer Gruppengrößen (13) für jede Kandidatengruppe aus der Übergangsratenmatrix, die für die Kandidatengruppe erhalten wird, wobei die Anordnung charakteristischer Gruppengrößen mindestens eine relative Kooperationsmetrik für eine für die Kandidatengruppe berechnete Entropie umfasst;
    - Bestimmen mindestens einer Zusammenlegung (20) von Erkennungsvorrichtungen (200) aus der Anordnung charakteristischer Gruppengrößen zu bestimmen, die für jede Kandidatengruppe bestimmt wird, wobei eine Erkennungszusammenlegung mindestens zwei Erkennungsvorrichtungen (200) umfasst, die in einem Netzwerk verbunden sind und imstande sind, miteinander zusammenzuwirken; wobei das kooperative Erkennungsverfahren imstande ist, jede zur Überwachung der Überwachungszone bestimmte Zusammenlegung zu verwenden.

**Claims**

1. A cooperative detection system (100) comprising a detection assembly (2) for monitoring a monitoring zone, the detection assembly comprising a plurality of detection devices (200), **characterized in that** it comprises:

    - a transition rate matrix determination unit (12) configured to estimate a transition rate matrix, for each candidate group among one or several candidate groups of detection devices of the assembly (2), by carrying out a learning phase based on hidden Markov chains (HMM), from an initial dataset indicating activity states of the detection devices (200) of the detection assembly (2) detected beforehand and from a modeling of the detection assembly (2), the transition rate matrix of a candidate group comprising coefficients, each one representing a transition speed from one activity state to the other for each detection device (200) of the associated candidate group,
    - a characteristic group value determination unit (13) configured to determine a set of characteristic values for each candidate group from a transition rate matrix obtained for the candidate group, the set of characteristic group values comprising at least one cooperative metric relative to an entropy determined for the candidate group;
    - a regrouping determination unit (14) configured to determine at least one regrouping (20) of detection devices (200) from the set of characteristic group values determined for each candidate group, a detection regrouping comprising at least two detection devices (200) connected in a network and able to cooperate together;

the cooperative detection system being able to use a regrouping determined for the monitoring of the monitoring zone.

2. The detection system according to claim 1, wherein a coefficient of the transition rate matrix has a first index corresponding to an initial state and a second index corresponding to a final state, the transition rate matrix being a square matrix, the dimension of the transition rate matrix associated with a candidate group of size R being defined by the total number $L^R$ of possible activity states for all the R detection devices of the candidate group, each detection device having a number L of activity states.

3. The cooperative detection system according to one of the preceding claims, further comprising a state chaining rules determination unit (16) configured to determine state chaining rules for each determined regrouping (20), from transition rate matrices determined by the transition rate matrix determination unit (12) for the candidate groups comprising at least one regrouping detection device and a weight associated with said transition rate matrices, the state chaining rules determined for a regrouping defining the activity state transitions of the regrouping detection devices, the cooperative detection system (100) being able to control each regrouping (20) determined for the monitoring of the monitoring zone, according to the state chaining rules determined for the regrouping.

4. The cooperative detection system according to one of the preceding claims, wherein the monitoring zone is located around detection devices of the detection assembly (2).

5. The cooperative detection system according to one of claims 2 to 4, wherein the characteristic group value determination unit (13) is configured to determine a probability matrix from the transition rate matrix associated with a candidate group, by normalizing the non-diagonal terms of each line of the transition rate matrix so that their sum is unitary, which provides a probability vector $V_i$ for each line i of the transition rate matrix, comprising probability values, each one in correspondence with one of the terms of the line i of the transition rate matrix, except for the diagonal term, said probability values $p_{ik}$ of the probability vector $V_i$ obtained for a line i representing the probabilities of transitions to a final state, said probability vectors $V_i$ obtained for all the lines of the transition rate matrix forming the lines of said probability matrix P, the cooperative metric relative to an entropy of the candidate group being calculated from the probability matrix.

6. The cooperative detection system according to claim 5, wherein the calculation of the cooperative metric relative to an entropy of the candidate group comprises, for each line i of the probability matrix P, determining an entropy value, the entropy values determined for tha various lines of the probability matrix forming an entropy vector H comprising entropy values $h_i$ associated with each line i of the probability matrix P, the cooperative metric relative to an entropy of the candidate group being determined from the entropy vector H.

7. The cooperative detection system according to claim 6, wherein the entropy value $h_i$ associated with a line i of the probability matrix P is a Shannon entropy, determined according to the following equation (1):

$$h_i = -\sum_{k=1}^{N-1} p_{ik} \ln p_{ik} \quad (1)$$

8. The cooperative detection system according to claim 7, wherein the cooperative metric is an entropy average calculated by taking an average of the components of the entropy vector H, weighted by applying a weighting coefficient $\alpha_j$ to each component $h_j$ of the entropy vector H.

9. The cooperative detection system according to claim 8, wherein the weighting coefficients $\alpha_j$ constitute the components of a vector $\eta$ of average stationary state defined by:

$$\eta = \frac{1}{n} \exp(\tau.M^T) \begin{pmatrix} 1 \\ \vdots \\ 1 \end{pmatrix},$$

where n designates the dimension of the transition rate matrix M and $\tau$ is a parameter representing a time value.

10. The cooperative detection system according to claim 9, wherein the time parameter $\tau$ is equal to $\tau = 10^3 \times \max(\lambda_i)$, $\lambda_i$ designating the eigenvalues of the transition rate matrix.

**11.** The cooperative detection system according to one of the preceding claims 8 to 10, wherein the set of characteristic group values is a value triplet comprising the list $L_q$ of the detection devices (200) of the candidate group $G_q$, the average entropy $< H_q >$, and the number of measurements $K_q$ used to calculate the transition rate matrix.

**12.** The cooperative detection system according to claim 11, wherein the regrouping determination unit (14) is able to generate a representation of the candidate groups selected in the detection set (2) comprising n detection devices (200), in the form of a mechanical system, in the representation space of dimension n - 1, from the value triplet determined for each candidate group $\{L_q, (\langle H_q \rangle), K_q\}$, and wherein:

- each detection device (200) of a candidate group is represented by a point in the representation space,
- for each candidate group comprising a list $L_q$ of p detection devices 200, the mechanical system comprises p elastic connections connecting the points representative of the detection devices (200) of the candidate group at the center of a hypersphere (50) circumscribed at p points, in the representation space;
- The non-load length I of said p elastic connections is defined by the average entropy $\langle H_q \rangle$;
- the elastic stiffness constant k of the p elastic connections is proportional to the number $K_q$.

**13.** The cooperative detection system according to claim 12, wherein the mechanical system further comprises friction forces of the elastic damping type or friction forces of the braking type in a fluid medium relative to friction coefficients chosen to bring the mechanical system to a stable state.}

**14.** The cooperative detection system according to one of claims 12 and 13, wherein the regrouping unit (14) is able to cause the mechanical system to change to a stable state by implementing a resolution of a differential system associated with equations that govern the mechanical system.

**15.** The cooperative detection system according to one of claims 12 to 14, wherein the regrouping unit (14) is able to determine at least one regrouping of detection devices by applying a regrouping algorithm to the mechanical system using the distance between the points representative of the detection devices in the mechanical system (500), in the stable state.

**16.** A cooperative detection method (100) for monitoring a monitoring zone by using an detection assembly (2) comprising a plurality of detection devices (200), **characterized in that** it comprises the steps consisting of:

- defining one or more candidate groups of detection devices (200) of the detection assembly (2),
- determining a transition rate matrix (12) for each candidate group by carrying out a learning phase learning phase based on hidden Markov chains (HMM), from an initial dataset indicating activity states of detection devices of the detection assembly (2) detected beforehand and a modeling of the detection assembly (2), the transition rate matrix of a candidate group comprising coefficients, each coefficient representing a transition speed from one state to the other for each detection device (200) of the associated candidate group,
- determining a set of characteristic group values (13) for each candidate group from the transition rate matrix obtained for the candidate group, the set of characteristic group values comprising at least one cooperative metric relative to an entropy calculated for the candidate group;
- determining at least one regrouping (20) of detection devices (200) from the set of characteristic group values determined for each candidate group, a detection regrouping comprising at least two detection devices (200) connected in a network and able to cooperate together; the method for cooperative detecting being able to use each determined regrouping for the monitoring of the monitoring zone.

**100**

2

1

| Dispositifs de détection (200) | Dispositif de détection (200) |
| --- | --- |

20

| Dispositif de détection (200) | Dispositif de détection (200) |
| --- | --- |
| Dispositif de détection (200) | Dispositif de détection (200) |

| Dispositif de détection (200) | .... |
| --- | --- |

DISPOSITIF DE CONTROLE

3

Jeu de données d'état d'activité observées

**FIGURE 1**

1

Unité de modélisation

10

Unité de détermination de matrice de taux de transition

12

Unité de détermination de valeurs caractéristiques de groupe candidat

13

Unité de détermination de regroupement

14

Unité de détermination de logique d'enchaînement d'état

16

**FIGURE 2**

| T(s) | #1 | #2 | #3 | #4 |
|------|------|------|------|------|
| 0 | ... | ... | ... | ... |
| 1 | ... | ... | ... | ... |
| 2 | ... | ... | ... | ... |
| ... | ... | ... | ... | ... |
| 241 | 0 | 0 | NaN | NaN |
| 242 | 0 | 0 | NaN | NaN |
| 243 | 1 | 0 | NaN | NaN |
| 244 | 1 | 0 | NaN | NaN |
| 245 | 1 | 1 | NaN | NaN |
| 246 | 1 | 1 | NaN | NaN |
| 247 | 0 | 1 | 0 | NaN |
| 248 | 0 | 1 | 1 | NaN |
| 249 | 0 | 0 | 1 | 1 |
| 250 | 0 | 0 | 0 | 1 |
| 251 | 1 | 0 | 1 | 0 |
| 252 | 1 | 0 | 1 | 1 |
| 253 | 1 | 1 | 0 | 1 |
| 254 | NaN | 1 | 1 | 0 |
| 255 | NaN | NaN | 1 | 1 |
| 256 | NaN | NaN | 0 | 1 |
| ... | ... | ... | ... | ... |

## Figure 3

50

| T | #1 | #2 | #3 | #4 |
|---|---|---|---|---|
| 241 | 0 | 0 | NaN | NaN |
| 242 | 0 | 0 | NaN | NaN |
| 243 | 1 | 0 | NaN | NaN |
| 244 | 1 | 0 | NaN | NaN |
| 245 | 1 | 1 | NaN | NaN |
| 246 | 1 | 1 | NaN | NaN |
| 247 | 0 | 1 | 0 | NaN |
| 248 | 0 | 1 | 1 | NaN |
| 249 | 0 | 0 | 1 | 1 |
| 250 | 0 | 0 | 0 | 1 |
| 251 | 1 | 0 | 1 | 0 |
| 252 | 1 | 0 | 1 | 1 |
| 253 | 1 | 1 | 0 | 1 |
| 254 | NaN | 1 | 1 | 0 |
| 255 | NaN | NaN | 1 | 1 |
| 256 | NaN | NaN | 0 | 1 |

50

| T | #1 | #2 | #3 | #4 |
|---|---|---|---|---|
| 241 | 0 | 0 | NaN | NaN |
| 242 | 0 | 0 | NaN | NaN |
| 243 | 1 | 0 | NaN | NaN |
| 244 | 1 | 0 | NaN | NaN |
| 245 | 1 | 1 | NaN | NaN |
| 246 | 1 | 1 | NaN | NaN |
| 247 | 0 | 1 | 0 | NaN |
| 248 | 0 | 1 | 1 | NaN |
| 249 | 0 | 0 | 1 | 1 |
| 250 | 0 | 0 | 0 | 1 |
| 251 | 1 | 0 | 1 | 0 |
| 252 | 1 | 0 | 1 | 1 |
| 253 | 1 | 1 | 0 | 1 |
| 254 | NaN | 1 | 1 | 0 |
| 255 | NaN | NaN | 1 | 1 |
| 256 | NaN | NaN | 0 | 1 |

53

| T | #1 | #2 |
|---|---|---|
| 241 | 0 | 0 |
| 242 | 0 | 0 |
| 243 | 1 | 0 |
| 244 | 1 | 0 |
| 245 | 1 | 1 |
| 246 | 1 | 1 |
| 247 | 0 | 1 |
| 248 | 0 | 1 |
| 249 | 0 | 0 |
| 250 | 0 | 0 |
| 251 | 1 | 0 |
| 252 | 1 | 0 |
| 253 | 1 | 1 |

54

| T | #3 | #4 |
|---|---|---|
| 249 | 1 | 1 |
| 250 | 0 | 1 |
| 251 | 1 | 0 |
| 252 | 1 | 1 |
| 253 | 0 | 1 |
| 254 | 1 | 0 |
| 255 | 1 | 1 |
| 256 | 0 | 1 |

## Figure 4

53

| | |
|---|---|
| 0 | 0 |
| 0 | 0 |
| 1 | 0 |
| 1 | 0 |
| 1 | 1 |
| 1 | 1 |
| 0 | 1 |
| 0 | 1 |
| 0 | 0 |
| 0 | 0 |
| 1 | 0 |
| 1 | 0 |
| 1 | 1 |

$M_{53}$

$$
\begin{array}{c}
 & [00] \quad [01] \quad [10] \quad [11] \\
\begin{array}{c}[00]\\{}[01]\\{}[10]\\{}[11]\end{array}
\begin{pmatrix}
-0{,}5 & 0 & 0{,}5 & 0 \\
0{,}5 & -0{,}5 & 0 & 0 \\
0 & 0 & -0{,}5 & 0{,}5 \\
0 & 0{,}5 & 0 & -0{,}5
\end{pmatrix}
\end{array}
$$

54

| | |
|---|---|
| 1 | 1 |
| 0 | 1 |
| 1 | 0 |
| 1 | 1 |
| 0 | 1 |
| 1 | 0 |
| 1 | 1 |
| 0 | 1 |

$M_{54}$

$$
\begin{array}{c}
 & [00] \quad [01] \quad [10] \quad [11] \\
\begin{array}{c}[00]\\{}[01]\\{}[10]\\{}[11]\end{array}
\begin{pmatrix}
\cdots & \cdots & \cdots & \cdots \\
\cdots & -1 & 1 & 0 \\
\cdots & 0 & -1 & 1 \\
\cdots & 1 & 0 & -1
\end{pmatrix}
\end{array}
$$

# Figure 5

$M_{53}$

$$
\begin{array}{c@{\quad}cccc}
 & [00] & [01] & [10] & [11] \\
[00] & -0{,}5 & 0 & 0{,}5 & 0 \\
[01] & 0{,}5 & -0{,}5 & 0 & 0 \\
[10] & 0 & 0 & -0{,}5 & 0{,}5 \\
[11] & 0 & 0{,}5 & 0 & -0{,}5
\end{array}
$$

63

$\tau_{00\to10} = 2s$

[10]

[00]

$\tau_{10\to11} = 2s$

$\tau_{01\to00} = 2s$

[11]

[01]

$\tau_{11\to01} = 2s$

$M_{54}$

$$
\begin{array}{c@{\quad}cccc}
 & [00] & [01] & [10] & [11] \\
[00] & \cdots & \cdots & \cdots & \cdots \\
[01] & \cdots & -1 & 1 & 0 \\
[10] & \cdots & 0 & -1 & 1 \\
[11] & \cdots & 1 & 0 & -1
\end{array}
$$

64

$\tau_{01\to10} = 1s$

[01]

[10]

$\tau_{10\to11} = 1s$

[11]

$\tau_{11\to01} = 1s$

# Figure 6

Figure 7

$M_3$

|  | [000] | [001] | [010] | [011] | [100] | [101] | [110] | [111] |
|---|---|---|---|---|---|---|---|---|
| [000] | ... | ... | ... | ... | ... | ... | ... | ... |
| [001] | ... | $-1$ | 0 | 0 | 0 | 0,5 | 0 | 0,5 |
| [010] | ... | ... | ... | ... | ... | ... | ... | ... |
| [011] | ... | 0 | 0 | $-1$ | 0 | 0,33 | 0 | 0,67 |
| [100] | ... | 0 | 0 | 0 | $-1$ | 0,67 | 0 | 0,33 |
| [101] | ... | 0,14 | 0 | 0,14 | 0,29 | $-0,71$ | 0 | 0,14 |
| [110] | ... | 0 | 0 | 0 | 0 | 1 | $-1$ | 0 |
| [111] | ... | 0,14 | 0 | 0,29 | 0,14 | 0 | 0,29 | $-0,86$ |

Opération de normalisation

Vecteur de probabilité $\mathcal{V}_{[101]}$ ......... $[0,2 \quad 0 \quad 0,2 \quad 0,4 \quad 0 \quad 0,2]$

Vecteur d'entropie $H_{[101]}$ ......... $H_{[101]} = -\sum_k p_k \log p_k = 1{,}33$

Entropie moyenne $H_{moy}(M_3)$ .........

$$\left. \begin{array}{l} H_{[001]} = 0{,}69 \\ H_{[011]} = 0{,}64 \\ H_{[100]} = 0{,}64 \\ H_{[101]} = 1{,}33 \\ H_{[110]} = 0 \\ H_{[111]} = 1{,}33 \end{array} \right\} \rightarrow H_{moy}(M_3) = \frac{1}{8} \cdot \sum_{[ijk]} H_{[ijk]} = \frac{4{,}63}{8} = 0{,}58$$

Figure 7

$M_4$

|       | [00]    | [01]   | [10]   | [11]    |
|-------|---------|--------|--------|---------|
| [00]  | $-1$    | $0$    | $0,5$  | $0,5$   |
| [01]  | $0$     | $-1$   | $0,33$ | $0,67$  |
| [10]  | $0,1$   | $0,1$  | $-0,4$ | $0,2$   |
| [11]  | $0,125$ | $0,25$ | $0,25$ | $-0,625$|

#1,#2

$$\left.\begin{array}{l} H_{[00]} = 0,69 \\ H_{[01]} = 0,64 \\ H_{[10]} = 1,04 \\ H_{[11]} = 1,05 \end{array}\right\} \rightarrow H_{moy}(M_4) = \frac{1}{4} \cdot \sum_{[ij]} H_{[ij]} = \frac{3,42}{4} = 0,86$$

## Figure 8

$M_5$

|       | [00]   | [01]   | [10]   | [11]    |
|-------|--------|--------|--------|---------|
| [00]  | $\cdots$ | $\cdots$ | $\cdots$ | $\cdots$ |
| [01]  | $\cdots$ | $-1$   | $0$    | $1$     |
| [10]  | $\cdots$ | $0$    | $-1$   | $1$     |
| [11]  | $\cdots$ | $0,36$ | $0,36$ | $-0,72$ |

#1,#3

$$\left.\begin{array}{l} H_{[01]} = 0 \\ H_{[10]} = 0 \\ H_{[11]} = 0,69 \end{array}\right\} \rightarrow H_{moy}(M_5) = \frac{1}{4} \cdot \sum_{[ij]} H_{[ij]} = \frac{0,69}{4} = 0,17$$

## Figure 9

$M_6$

|       | [00]   | [01]    | [10]  | [11]   |
|-------|--------|---------|-------|--------|
| [00]  | $-1$   | $0,67$  | $0$   | $0,33$ |
| [01]  | $0,22$ | $-0,55$ | $0$   | $0,33$ |
| [10]  | $0$    | $1$     | $-1$  | $0$    |
| [11]  | $0,1$  | $0,2$   | $0,2$ | $-0,5$ |

#2,#3

$$\left.\begin{array}{l} H_{[00]} = 0,64 \\ H_{[01]} = 0,67 \\ H_{[10]} = 0 \\ H_{[11]} = 1,05 \end{array}\right\} \rightarrow H_{moy}(M_6) = \frac{1}{4} \cdot \sum_{[ij]} H_{[ij]} = \frac{2,36}{4} = 0,59$$

## Figure 10

Figure 11

Figure 12

Modéliser l'ensemble de détection(900)

↓

Déterminer une matrice de taux de transition pour chaque groupe candidat (902)

↓

Déterminer un Q-uplet de grandeurs caractéristiques de coopération (904)

↓

Générer une représentation de l'ensemble de détection en système mécanique(906)

↓

Déterminer un ou plusieurs regroupements de dispositif de détection (908)

↓

Déterminer une logique d'enchaînement pour chaque regroupement obtenu (910)

**FIGURE 13**

**FIGURE 14**

$$k_{123} \quad \begin{array}{c} [000] \\ [001] \\ [010] \\ [011] \\ [100] \\ [101] \\ [110] \\ [111] \end{array} \quad \begin{array}{cccccccc} [000] & [001] & [010] & [011] & [100] & [101] & [110] & [111] \end{array} \qquad M_{123}$$

$$k_{12} \quad \begin{array}{c} [00\cdot] \\ [01\cdot] \\ [10\cdot] \\ [11\cdot] \end{array} \quad \begin{array}{cccc} [00\cdot] & [01\cdot] & [10\cdot] & [11\cdot] \end{array} \qquad M_{12}$$

$$k_{13} \quad \begin{array}{c} [0\cdot 0] \\ [0\cdot 1] \\ [1\cdot 0] \\ [1\cdot 1] \end{array} \quad \begin{array}{cccc} [0\cdot 0] & [0\cdot 1] & [1\cdot 0] & [1\cdot 1] \end{array} \qquad M_{13}$$

$$k_{23} \quad \begin{array}{c} [\cdot 00] \\ [\cdot 01] \\ [\cdot 10] \\ [\cdot 11] \end{array} \quad \begin{array}{cccc} [\cdot 00] & [\cdot 01] & [\cdot 10] & [\cdot 11] \end{array} \qquad M_{23}$$

**FIGURE 15**

**RÉFÉRENCES CITÉES DANS LA DESCRIPTION**

**Documents brevets cités dans la description**

- EP 3874480 A

**Littérature non-brevet citée dans la description**

- **LIU, YU-YING** ; **MORENO, ALEXANDER** ; **XU, MAXWELL A. et al.** Efficient Learning and Decoding of the Continuous-Time Hidden Markov Model for Disease Progression Modeling. *arXiv preprint arXiv:2110.13998*, 2021
- **RABINER, LAWRENCE R**. A tutorial on hidden Markov models and selected applications in speech recognition. *Proceedings of the IEEE*, 1989, vol. 77 (2), 257-286
- **LIU, YU-YING** ; **MORENO, ALEXANDER** ; **XU, MAXWELL A. et al.** Efficient Learning and Decoding of the Continuous-Time Hidden Markov Model for Disease Progression Modeling. *arXiv preprint arXiv:2110.13998,*, 2021
- **LIU, YU-YING** ; **MORENO, ALEXANDER** ; **XU, MAXWELL A et al.** Efficient Learning and Decoding of the Continuous-Time Hidden Markov Model for Disease Progression Modeling. *arXiv preprint arXiv:2110.13998*, 2021